(19) Europäisches Patentamt
European Patent Office
Office européen des brevets

(11) Publication number: 0 251 472 B1

(12) **EUROPEAN PATENT SPECIFICATION**

(45) Date of publication of patent specification: 17.04.91

(51) Int. Cl.[5]: C07C 233/12, A61K 31/16, A01N 37/18

(21) Application number: 87304473.9

(22) Date of filing: 20.05.87

(54) **Pesticidal unsaturated lipid amides.**

(30) Priority: 21.05.86 GB 8612391
08.08.86 GB 8619387
02.03.87 GB 8704798

(43) Date of publication of application:
07.01.88 Bulletin 88/01

(45) Publication of the grant of the patent:
17.04.91 Bulletin 91/16

(84) Designated Contracting States:
BE CH DE ES FR GB GR IT LI LU NL SE

(56) References cited:
EP-A- 0 143 593
FR-A- 2 124 280

CHEMICAL ABSTRACTS, vol. 103, no. 19, 11th November 1985, page 155778, column 1, abstract no. 155781z, Columbus, Ohio, US; M. MIYAKADO et al.: "The Piperaceae amides. VI. Chemistry and insecticidal activities of Piperaceae amides and their synthetic analogs"; & NIPPON NOYKU GAKKAISHI 1985, 10(1), 11-17

(73) Proprietor: THE WELLCOME FOUNDATION LIMITED
Unicorn House 160 Euston Road
London NW1 2BP(GB)

(72) Inventor: Blade, Robert John Wellcome Research Laboratories
Ravens Lane
Berkhamsted Hertfordshire(GB)
Inventor: Robinson, John E. Wellcome Research Laboratories
Ravens Lane
Berkhamsted Hertfordshire(GB)
Inventor: Janes, Norman Frank
82, Marston Gardens
Luton Bedfordshire(GB)
Inventor: Khambay, Bhupinder Pall Singh
85, Warham Road
Harrow Weald Middlesex(GB)

(74) Representative: Rollins, Anthony John et al
Group Patents & Agreements The Wellcome Research Laboratories Langley Court
Beckenham Kent BR3 3BS(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

CHEMICAL ABSTRACTS, vol. 103, no. 19, 11th November 1985, page 155778, column 1, abstract no. 155782a, Columbus, Ohio, US; M. MIYAKADO et al.: "The Piperaceae amides. VIII. Insecticidal activities of phenoxy analogs of dihydropipercide"; & NIPPON NOYAKU GAKKAISHI 1985, 10(1), 25-30

CHEMICAL ABSTRACTS, vol. 103, Formula Index C17-Z, July-December 1985, page 2092f, column 3, formule C23H34ClNO2, Columbus, Ohio

PATENT ABSTRACTS OF JAPAN, vol. 7, no. 66 (C-157)[1211], 18th March 1983; & JP - A - 57 212150 (SUMITOMO KAGAKU KOGYO K.K.) 27-12-1982

## Description

This invention relates to pesticidal compounds.

EP-A-l64 l87 (The Welcome Foundation Limited) discloses pesticidal w-aryl lipid amide compounds having zero, one or two alkenyl links adjacent the carbonyl of the amide function, such links being optionally substituted by halo. It is stated that unsubstituted linking is preferred. It has now been found that surprisingly good activity is found when the unsaturated link is substituted by at least one optionally substituted alkyl group or nitrile group.

Miyakado et al (J. Pesticide Sci. l0 , 25030, l985) disclose various naturally-occurring and synthetic lipid amides, including two having a 3-methyl group, in other words a methyl group on the diene linking unit referred to above. However, except in the case of a compound having a 3,4-methylenedioxy substituent on the terminal aromatic group, they found that such a group did not increase insecticidal activity.

The present invention provides compounds of Formula (I)

(I) $Ar(CH_2)_xO(CH_2)_mA(CH_2)_n(CE^1=CE^2)_a(CE^3=CE^4)CONR^1Z$

wherein Ar is phenyl or naphthyl, in either case unsubstituted or substituted by one or more of alkyl, halogen, alkoxy, optionally substituted alkyl, or optionally substituted alkoxy

x = 0 or l

m = l to 7

n = l to 7

A - $CH_2$ or oxygen

a = 0 to l

$R^1$ is independently selected from hydrogen, $C_1$-6 alkyl and $C_{3-6}$ cycloalkyl (either of which may be substituted by one or more of halo, $C_{1-6}$ alkyl, $C_{2-6}$ al koxy, $C_{2-6}$ alkynyl, dioxalanyl and $C_{3-6}$ cycloalkyl

Z represents hydrogen or a group:

$-C^1(R_A)(R_B)-C^2(R_C)(R_D)(R_E)$

wherein $R_A$ and $R_B$, which may be identical or different, each represent hydrogen or methyl; $R_C$ represents methyl; $R_D$ represents methyl, ethyl, n -propyl, iso propyl, t -butyl or vinyl; and $R_E$ represents hydrogen or methyl, or wherein $R_C$ and $R_D$ form a methylene group ($=CH_2$) or together with $C^2$ form a cyclopropane or cyclobutane ring, $R_A$, $R_R$ and $R_E$ representing hydrogen or methyl, or wherein $R_A$ and $R_C$ together with $C^1$ and $C^2$ form a cyclobutane ring, $R_B$, $R_D$ and $R_E$ independently representing hydrogen or methyl:

$E^1$ $E^2$ $E^3$ and $E^4$ are independently selected from hydrogen, $C_{1-4}$ alkyl optionally substituted by halo, or nitrile, provided that at least one of $E^1$ , $E^2$ , $E^3$ and $E^4$ is optionally substituted alkyl or nitrile except that the compound (2E, 4E) N-isobutyl 3-methyl-12- (3-chlorophenoxy)-dodeca-2, 4-dienamide is excluded and provided that one but only one of $R^1$ and Z is hydrogen.

Preferably Ar is phenyl substituted by one or more halogen or trifluoromethyl groups. Conveniently, there are no more than three, preferably no more than two, such substituents. For the avoidance of doubt, it is hereby stated that 3,4-methylenedioxy is not to be regarded as being covered by the list of possible substituents given above.

Preferably a is l. Suitably A is $-CH_2-$ and the sum of m and n is equal to an odd number, preferably 3 or 5, or is equal to 6.

Preferably $R^1$ is hydrogen and Z is $C_{1-5}$ alkyl, most preferably isobutyl, l,2-dimethylpropyl or 2,2-dimethylpropyl.

Preferably the stereochemistry of the or each double bond conjugated to the carbonyl is trans . Stereochemically pure compounds (I) are preferred. Although he presence of Z isomers maybe tolerated for reasons of economy, the content of such isomers is kept as low as possible, for example not exceeding 33%, 25%, l0% or 5%.

Suitably at least one of $E^1$, $E^2$, $E^3$ and $E^4$ is hydrogen and one other is methyl, fluoromethyl or trifluoromethyl. Preferably $E^1$, $E^2$ and $E^4$ are hydrogen and $E^3$ is methyl, fluoromethyl or trifluoromethyl, particularly methyl. N-isobutyl ll-(3,5-bistrifluoromethylbenzyloxy)-3-methylundeca-2,4-dienamide, N-isobutyl l2-(2-naphthyloxy)-3-methyldodeca-2,4-dienamide,

N-isobutyl ll-(2,4-dichlorobenzyloxy)-3-methylundeca2,4-dienamide and N-isobutyl l2-(3,5-bistrifluoromethylphenoxy)-3-methylododeca-2,4-dienamide (in each case 2E, 4E) are particularly preferred compounds.

Thus, a particularly preferred class of compounds may be represented by Formula (IA):

(IA) $Ar(CH_2)_xO(CH_2)_m(CH_2)_nCE^1 = CH = CE^3 = CH\text{-}CONHZ$

where: Ar is phenyl optionally substituted by 3,5-bistrifluoromethyl or 2,4-dichloro or 2,3,4,5,6-pentafluoro or Ar is l-naphthyl or 2-naphthyl; x is 0 or l; m + n = 3, 5 or 6; $E^1$ and $E^3$ are independently hydrogen or methyl but not both hydrogen; Z is isobutyl, l,2-dimethyl, 2,2-dimethylpropyl or l,l,2-trimethylpropyl; and the two double bonds are both E (i.e. trans ), although the presence of some Z material may be tolerated for reasons of economy of manufacture.

Preferably, in Formula (IA), $E^1$ is hydrogen.

Compounds of Formula (I) may be prepared in any of the following ways:

(a) by amidation of the corresponding acid or acid derivative, i.e. by reaction of a compound of Formula (II) with a compound of Formula (III):

(II) $Ar(CH_2)_xO(CH_2)_mA(CH_2)_n(CE^1 = CE^2)_a(CE^3 = CE^4)COZ^1$

(III) $HNR^1Z$

wherein $Z^1$ is hydroxyl, halo, a phosphoroimidate ester (-P(→0)(OAryl)NH.aryl) or alkoxy and the other variables are as defined above,

(b) by reaction of a compound of Formula (IV) with a compound of Formula (V):

(IV) $Ar(CH_2)_xO(CH_2(_mA(CH_2)_n(CE^1 = CE^2)_pZ'$

(V) $Z''CONR^1Z$

where one of Z' and Z" is $-C(O)E^5$ and the other is $(Z^2)_3P = CE^6(CE^3 = CE^4)_q$ or $(Z^2)_2P(O) = CE^6\text{-}(CE^3 = CE^4)_q$, wherein $Z^2$ is $C_{1\text{-}4}$ alkyl, $C_{1\text{-}4}$ alkoxy (preferably ethoxy) or aryl preferably phenyl), p and q are each 0 or l and p + q is 0 or l, $E^5$ is $E^1$ or $E^3$ and $E^6$ is $E^2$ or $E^4$, as appropriate;

(c) by an elimination reaction on a compound of Formula (VI) or (VII)

(VI) $Ar(CH_2)_xO(CH_2)_mA(CH_2)_n(CE^1 = CE^2)CE^3(X)CE^4(Y)CONR^1Z$

(VII) $Ar(CH_2)_xO(CH_2)_mA(CH_2)_nCE^1(X)CE^2(Y)(CE^3 = CE^4)CONR^1Z$

where one of X and Y is hydrogen and the other is a group Q(→O)L, in which Q is sulphur or selenium and L is a suitable group such as $C_{1\text{-}4}$ alkyl (preferably methyl) or aryl (preferably phenyl);

(d) by reacting a compound of Formula (VIII) with a compound of Formula (IX):

(VIII) $Ar(CH_2)_xO(CH_2)_mA(CH_2)_nCE^1 = CE^2\text{-}M$

(IX) $Hal\text{-}(CE^3 = CE^4)CONR^1Z$

wherein Hal is halide e.g. bromide or iodide and M is a silicon or a metal atom or metal-containing group, for example comprising zirconium, aluminium, zinc, tin, tellurium or copper, such as a bis-(cyclopentadienyl) zirconium chloride group, zirconium and zirconium-containing groups being generally preferred;

(e) by reaction of a compound of Formula (X) with a compound of Formula (XI):

(X) $Ar(CH_2)_xZ^3$

(XI) $Z^4\text{-}(CH_2)_mA(CH_2)_n(CE^1 = CE^2)_a(CE^3 = CE^4)CONR^1Z$

wherein one of $Z^3$ and $Z^4$ is -OH and the other is -OH or a suitable leaving group such as halo;

(f) when A is oxygen, by reaction of a compound of Formula (XII) with a compound of formula (XIII):

(XII) $Ar(CH_2)_xO(CH_2)_mZ^5$

(XIII) $Z^6(CH_2)_n(CE^1 = CE^2)_a(CE^3 = CE^4)CONR^1Z$

where one of $Z^5$ and $Z^6$ is -OH and the other is a suitable leaving group such as halo;

(g) by reacting a compound of Formula (XIV) with one of Formula (XV) or (XVI)

(XIV) $Ar(CH_2)_xO(CH_2)_mA(CH_2)_nCE^1 = CE^2\text{-}Hal$

(XV) $HCE^3 = CE^4CONR^1Z$ (XVI) $E^3C{\equiv}CE^4CONR^1Z$

where Hal is halogen, e.g. iodine or bromine, followed by semihydrogenation of the triple bond, if present;

(h) by semi-hydrogenation of the triple bond in a compound of Formula (XVII) or (XVIII):

(XVII) $Ar(CH_2)_xO(CH_2)_mA(CH_2)_n\text{-}C{\equiv}C\text{-}(CE^3 = CE^4)_bCONR^1Z$

(XVIII) $Ar(CH_2)_xO(CH_2)_mA(CH_2)_n\text{-}(CE^1 = CE^2)_a\text{-}C{\equiv}C\text{-}CONR^1Z$

wherein a and b are both l;

(i) by conversion of one compound of Formula (I) prepared as above into another compound of Formula (I) by any suitable process.

Process (a) is normally carried out at )°C to room temperature (i.e. about 0° - 25° or 0° - 20°C) in an aprotic solvent, such as ether, dichloromethane or benzene, optionally in the presence of a tertiary amine, such as triethylamine, but in the absence of water. If the compound of Formula (II) is an acid halide, for example acid chloride, then it may be formed from the corresponding acid by reaction with a suitable reagent such as oxalyl chloride or thionyl chloride. When $Z^1$ is a phosphoroimidate group then this is suitable formed from (PhO)P→O)NHPh Cl. The acid, or the acid function in the compound of Formula (II),

may be prepared by hydrolysis of an ester, the ester being prepared by a conventional Wittig or Wadsworth-Emmons reaction, using for example an aldehyde and ethoxycarbonylmethylene triphenylphosphorane or an anion from triethylphosphonocrotonate. This latter reaction may result in an isomeric mixture, for example a mixture of (Z) and (E) substituted dienoates; such a mixture may be reacted as above, and the resulting mixture of amides separated by chromatography or other convenient techniques. The Wittig-type reagent may be produced for example by the following route or a modification thereof:

(1) N-bromo succinimide

$$(CH_3)_2C{=}CHCO_2Et \longrightarrow (EtO)_2POCH_2C(CH_3){=}CHCO_2Et$$

(2) $(EtO)_3P$ (E+Z)

Aldehydes may be produced, if desired, by one of the following routes which are particularly applicable to naphthoxy compounds.

(A) $ArOH + HO(CH_2)_{n+1}OTHP \longrightarrow ArO(CH_2)_{n+1}OTHP$

(B) $ArOH + Br(CH_2)_{n+1}OTHP \longrightarrow ArO(CH_2)_{n+1}OTHP$

(C) $ArO(CH_2)_{n+1}OTHP \longrightarrow ArO(CH_2)_nCH_2OH$

(D) $ArONa + Br(CH_2)_{n+1}OH \longrightarrow ArO(CH_2)_nCH_2OH$

(E) $ArO(CH_2)_nCH_2OH \longrightarrow ArO(CH_2)_nCHO$

(THP = tetrahydropyran-2-yl)

In the above route (A) represents reaction in the presence of N,N'-dicyclohexylcarbodiimide (DCC), (B) reaction under phase-transfer conditions, for example using 50% aqueous sodium hydroxide and tetrabutylammonium bromide at 90°, (C) acidification to produce an alcohol, (D) reaction of for example the sodium naphthoxide with the bromo alcohol in refluxing benzene and dimethyl formamide, and (E) koxidation to the aldehyde using, for example, pyridinium chlorochromate.

The present invention also includes within its scope intermediates for the production, inter alia of compounds I such as those of Formula (II) (e.g.

$$ArO(CH_2)_nCH{\overset{E}{=}}CHCE^3{=}CHCO_2H \text{ and}$$
$$ArO(CH_2)_nCH{\overset{E}{=}}CHCE^3{=}CHCO_2Alk)$$

When $Z^1$ is alkoxy, the compound of Formula (II) is treated with a complex of the compound of Formula (III) and trialkyl (preferably trimethyl) aluminium in an aprotic solvent such as benzene or toluene, under reflux.

Alternatively, the ester referred to above may be derived by rearrangement and elimination on a compound of Formula (XIX)

$$\text{(XIX)}\quad Ar(CH^2)_xO(CH_2)_mA(CH_2)_{n+2}CE^3{=}C\begin{cases} S(\rightarrow O)R^3 \\ CO_2R^4 \end{cases}$$

wherein $R^3$ is any suitable group, such as phenyl, and $R^4$ is $C_{1-4}$ alkyl, e.g. methyl or ethyl.

The compound of formula (XIX) may be obtained by reaction of a compound of Formula (XX) with a compound of Formula (XXI):

(XX) $Ar(CH_2)_xO(CH_2)_mA(CH_2)_{n+2}COH$

(XXI) $PhS(O)CH_2CO_2R^4$

A further route is for the ester above to be prepared by elimination on a compound of Formula (XXII):

(XXII) $Ar(CH_2)_xO(CH_2)_mA(CH_2)_n\text{-}A^1\text{-}A^2(CE^3=CE^4)COOR^4$

wherein $R^4$ is as defined above, $A^1$ is $-CHE^1-$ and $A^2$ is $CE^2(OR^5)$, $R^5$ being H or acyl such as acetyl. The reaction is preferably carried out in an aromatic solvent, conveniently in the presence of a molybdenum catalyst and a base, such as bis-trimethylsilylacetamide.

A further route for the above ester is by reaction of a compound of Formula (XXIII) with one of Formula (XXIV):

(XXIII) $Ar(CH_2)_xO(CH_2)_mA(CH_2)_n(CE^1=CE^2)C(=O)E^3$

(XXIV) $Me_3SiCHE^4COOR^4$

where $R^4$ is as above. This process may be carried out in a dry solvent, e.g. tetrahydrofuran in the absence of oxygen, in the presence of a base, e.g. lithium cyclohexylisopropylamide.

A further route for the above ester is by reaction of compound of Formula (XXV) with compound of Formula (XXVI)

(XXV) $Ar(CH_2)_xO(CH_2)_mA(CH_2)_n(CE^1=CE^2)BCO_2R^4$

(XXVI) $E^3\text{-}M$

where B is a group $-C(OD)=CE^4-$, in which D is a suitable group such as dialkylphosphate or trifluoromethanesulphonate, M is a metal such as copper (I) or copper (I) associated with lithium or magnesium, and $R^4$ is as above.

This process can be performed at low temperature in a dry ethereal solvent such as diethyl ether, dimethyl sulphide or tetrahydrofuran in the absence of oxygen.

A still further route is for the ester to be formed by reaction of a compound of Formula (IX) above with one of Formula (XXVII):

(XXVII) $Hal\text{-}(CE^3=CE^4)CO_2R^4$

Process (b) is carried out in an anhydrous inert solvent, for example an ether such as tetrahydrofuran, optionally in the presence of a base, and preferably in the absence of oxygen, e.g. under a nitrogen atmosphere, at a low temperature (-40 to 0 °C). The Wittig-type reagent may be obtained from compounds of Formula (V) by reaction with a base such as lithium diisopropylamide, butyllithium, sodium alkoxide or sodium hydride.

Process (c) may be effected by refluxing in a suitable non-polar solvent, such as benzene, toluene or xylene. The compound of Formula (VI) or (VII) may be prepared by oxidation, for example with periodate, of the corresponding compound having a QL group. This latter compound, in turn, may be prepared by reaction of a compound of Formula (XXVIII) with a compound of Formula (XXIX):

(XXVIII) $Ar(CH_2)_xO(CH_2)_mA(CH_2)_nCHE^1=CE^2=CE^3G$

(XXIX) $LS(\rightarrow O)CHE^4CONR^1Z$

where G is an alkyl or aryl group. Preferably, the compound of Formula (XXIX) is reacted with trifluoroacetic anhydride in trifluoroacetic acid and then the compound of Formula (XXVIII) is added, at 0-20 °C.

Process (d) is normally carried out at room temperature, in a dry ethereal solvent such as tetrahydrofuran, in the presence of a palladium (0) catalyst, (such as bis(triphenylphosphine) palladium) and under an inert atmosphere of nitrogen or argon.

When processes (e) and (f) comprise the reaction of two alcohols, this is preferably in the presence of a dehydrating agent, such as concentrated sulphuric acid or diethyl diazo carboxylate, in a non-polar solvent

at about 80-110° C. When $Z^3$ is halo, a base is preferably present. Other standard methods for the formation of ethers and thioethers, such as those described in "Compendium of Organic Synthetic Methods", Harrison and Harrison, Wiley Interscience, (New York) 1971, may be used.

Process (g) may be conducted at room temperature to reflux in the presence of a base, e.g. triethylamine and a palladium (o) catalyst in the absence of oxygen.

The alkyne compound of Formula (XVII) or (XVIII) may, when $E^1$ or $E^3$ is hydrogen, be prepared by reaction of a compound Formula (XXX) with a compound of Formula (XXI) or (XXII):

(XXX) $Ar(CH_2)_xO(CH_2)_mA(CH_2)_n$-Hal

(XXXI) $E^1C{\equiv}C(CE^3{=}CE^4)CONR^1Z$

(XXXII) $E^3{\equiv}C$-$CONR^1Z$

at room temperature or lower, in the presence of a base (such as butyl lithium) and in an etheral solvent (such as THF) or by any process analogous to processes (a) to (h) above, resulting in the formation of a compound having a triple bond.

The intermediates of Formulae (II)-(XXXII) may be prepared by standard methods. For example, the compounds of Formula (V) may be prepared by the reaction of an appropriate phosphine, phosphonate or phosphite with an w-halo amide.

Compounds of Formula (IV) may be prepared by hydrolysis of a ketal ring or oxidation of the corresponding alcohol, for example using pyridinium chlorochromate or oxalyl chloride/DMSO.

Compounds of Formula (I) may be used to control arthropod pests such as insects and acarines. Acaricidal activity has been found to be enhanced when $R^1$ is hydrogen and $R^2$ has an alkyl substituent alpha to the nitrogen, for example when $R^2$ is 1,2-dimethylpropyl.

The compounds of Formula (I) may be used for such purposes by application of the compounds themselves or in diluted form in known fashion as a dip, spray, lacquer, foam, dust, powder, aqueous suspension, paste, gel, shampoo, grease, combustible solid, vapour emanator (e.g. coil, mat or the like), granule, aerosol, oil suspensions, oil solutions, pressure-pack, impregnated articles (such as a plastics ear tag or collar or a strip to treat the air of an enclosed space) or pour-on formulation. Dip concentrates are not applied per se , but diluted with water and the animals immersed in a dipping bath containing the dip wash. Sprays may be applied by hand or by means of a spray race or arch. The animal, plant or surface may be saturated with the spray by means of high volume application or superficially coated with the spray by means of light or ultra low volume application. Aqueous suspensions may be applied to the animal in the same manner as sprays or dips. Dusts may be distributed over the animals by means of a powder applicator or incorporated in perforated bags attached to trees or rubbing bars. Pastes, shampoos and greases may be applied manually or distributed over the surface of an inert material against which animals rub and transfer the material to their skins. Pour-on formulations are dispensed as a unit of liquid of small volume on to the backs of animals such that all or most of the liquid is retained on the animals.

The compounds of Formula (I) may be formulated either as formulations ready for use on the animals or as formulations requiring dilution prior to application, but both types of formulation comprise a compound of Formula (I) in intimate admixture with one or more carriers or diluents. The carriers may be liquid, solid or gaseous or comprise mixtures of such substances, and the compound of Formula (I) may be present in a concentration of from 0.025 to 99% w/v depending upon whether the formulation requires further dilution.

Dusts, powders and granules comprise the compound of Formula (I) in intimate admixture with a powdered solid inert carrier for example suitable clays, kaolin, talc, mica, chalk, gypsum, vegetable carriers, starch and diatomaceous earths.

Sprays of compound of Formula (I) may comprise a solution in an organic solvent (e.g. those listed below) or an emulsion in water (dip wash or spray wash) prepared in the field from an emulsifiable concentrate (otherwise known as a water miscible oil), a wettable powder or a controlled release formulation, such as a micro-encapsulated formulation. The concentrate preferably comprises a mixture of the active ingredient, with or without an organic solvent and one or more emulsifiers. Solvents may be present within wide limits but preferably in an amount of from 0 to 90% w/v of the composition and may be selected from kerosene, ketones, alcohols, xylene, aromatic naphtha, and other solvents known in the formulating art. The concentration of emulsifiers may be varied within wide limits but is preferably in the range of 5 to 25% w/v and the emulsifiers are conveniently non-ionic surface active agents including polyoxyalkylene esters of alkyl phenols and polyoxyethylene derivatives of hexiotol anhydrides and anionic surface active agents including Na lauryl sulphate, fatty alcohol ether sulphates, Na and Ca salts of alkyl aryl sulphonates and

alkyl sulphosuccinates.

Wettable powders comprise an inert solid carrier, one or more surface active agents, and optionally stabilisers and/or anti-oxidants.

Emulsifiable concentrates comprise emulsifying agents, and often an organic solvent, such as kerosene, ketones, alcohols, xylenes, aromatic naphtha, and other solvents known in the art.

Wettable powders and emulsifiable concentrates will normally contain from 5 to 95% by weight of the active ingredient, and are diluted, for example with water, before use. Microencapsulated formulations may be made by aby known technique, for example coacervation or interfacial polymerisation.

Lacquers comprise a solution of the active ingredient in an organic solvent, together with a resin, an optionally a plasticiser.

Dip washes may be prepared not only from emulsifiable concentrates but also from wettable powders, soap based dips and aqueous suspensions comprising a compound of Formula (I) in intimate admixture with a dispersing agent and one or more surface active agents.

Aqueous suspensions of a compound of Formula (I) may comprise a suspension in water together with suspending, stabilizing or other agents. Aqueous solutions may also be formed from acid addition salts of a compound of Formula (I). The suspensions or solutions may be applied per se or in a diluted form in known fashion. Electrostatic spraying techniques may be used with suitable formulations.

Greases (or ointments) may be prepared from vegetable oils, synthetic esters of fatty acids or wool fat together with an inert base such as soft paraffin. A compound of Formula (I) is preferably distributed uniformly through the mixture in solution or suspension. Greases may also be made from emulsifiable concentrates by diluting them with an ointment base.

Pastes and shampoos are also semi-solid preparations in which a compound of Formula (I) may be present as a uniform dispersion in a suitable base such as soft or liquid paraffin or made on a non-greasy basis with glycerine, mucilage or a suitable soap. As greases, shampoos and pastes are usually applied without further dilution they should contain the appropriate percentage of the compound of Formula (I) required for treatment.

Aerosol sprays may be prepared as a simple solution of the active ingredient in the aerosol propellant and co-solvent such as halogenated alkanes and the solvents referred to above, respectively. Pour-on formulations may be made as a solution or suspension of a compound of Formula (I) in a liquid medium which also contains a viscous oil to minimise spreading of the formulation on the surface of the animals. An avian or mammal host may also be protected against infestation of acarine ectoparasites by means of carrying a suitably-moulded, shaped plastics article impregnated with a compound of Formula (I). Such articles include impregnated collars, tags, bands, sheets and strips suitably attached to appropriate parts of the body.

The concentration of the compound of Formula (I) to be applied to a locus (e.g. animal, grain, crop, soil, building etc.) will vary according to the compound chosen, the interval between treatments, the nature of the formulation and the likely infestation, but in general 0.001 to 20.0% w/v and preferably 0.01 to 10% of the compound should be present in the applied formulation. The amount of the compound deposited on an animal will vary according to the method of application, size of the animal, concentration of the compound in the applied formulation, factor by which the formulation is diluted and the nature of the formulation, but in general will lie in the range from 0.001% to 0.5% except for undiluted formulations such as pour-on formulations which in general will be deposited at a concentration in the range from 0.1 to 20.0% and preferably 0.1 to 10%. For public health usage, a deposited concentration of up to about 5% may be needed. The concentrate may contain up to 90% active ingredient.

Dusts, greases, pastes and aerosol formulations are usually applied in a random fashion as described above and concentrations of 0.001 to 20% w/v of a compound of Formula (I) in the applied formulation may be used.

Bait formulations for, for example, cockroaches will include suitable attractants and/or foodstuffs. The compounds of the invention can be formulated specifically for use on grain or on the exposed surfaces of buildings, or for space spraying.

The compounds may be administered in an animal's feed to combat insect larvae infesting the animal's dung. Any suitable formulation, including microencapsulated material, may be used. The amount of the compound which is administered will vary according to the type and size of animal, and is chosen to provide a suitable concentration of the compounds in the animal's dung. Typically, 0.001 to 100mg/kg bodyweight, preferably 0.1 to 10 mg/kg, are administered daily, to give concentrations of 0.001 to 1%, preferably 0.01 to 0.1% compound in the dung. The compound will usually be formulated as a concentrate or premix for mixing with a feed supplement, feed concentrate, roughage or the like. Alternatively, the compound may be added to the supply of drinking water. Suitable animals include cattle, pigs, horses,

sheep, goats and poultry.

Insect pests include members of the orders Coleoptera (e.g. Anobium , Tribolium , Sitophilus , Diabrotica , Anthonomus , Hylotrupes or Anthrenus spp.), Lepidoptera (e.g. Ephestia , Plutella , Chilo , Heliothis , Spodoptera , Tinea or Tineola spp.), Diptera (e.g. Anopheles , Simulium , Musca , Aedes , Culex , Glossina , Stomoxys , Haematobia , Tabanus , Hydrotaea , Lucilia , Chrysomia , Callitroga , Dermatobia , Hypoderma , Liriomyza , and Melophagus spp.), Phthiraptera (Malophaga e.g. Damalina spp. and Anoplura e.g. Linognathus and Haematopinus spp,) Hemiptera (e.g. Triatoma , Rhodnius , Aphis, Bemisia Aleurodes , Nilopavata , Nephrotetix or Cimex spp.), Orthoptera (e.g.Schistocerca or Acheta spp.), Dictyoptera (e.g. Blattella , Periplaneta or Blatta spp.), Hymenoptera (e.g. Solenopsis or Monomorium spp.), Isoptera (e.g. Reticulitermes spp.), Siphonaptera (e.g. Ctenocephalides or Pulex spp.), Thysanura (e.g. Lepisma spp.), Dermaptera (e.g. Forficula spp.) and Psocoptera (e.g. Peripsocus spp.). Acarine pests include ticks, e.g. members of the genera Boophilus , Rhipicephalus , Amblyomma , Hyalomma , Ixodes , Haemaphysalis , Dermocentor and Anocentor , and mites and manges such as Tetranychus , Psoroptes , Psorergates , Chorioptes , Demodex , Dermatophagoides , Acarus , Tyrophagus and Glycyphagus Spp.

The compounds exhibit killing and/or knockdown activity against adult and/or larval arthropod pests.

Compounds of the invention may be combined with one or more other active ingredients (for example pyrethroids, carbamates and organophosphates) and/or with attractants and the like. Furthermore, it has been found that the activity of the compounds of the invention may be enhanced by the addition of a synergist or potentiator, for example one of the oxidas inhibitor class of synergists, such as piperonyl butoxide or NIA I6388. When an oxidase inhibitor synergist is present in a formula of the invention, the ratio of synergist to compound of Formula (I) will be in the range 25:I-I:25 e.g. about I0:I.

Stabilisers for preventing any chemical degradation which may occur with the compounds of the invention include, for example, antioxidants (such as tocopherols, butylhydroxyanisole and butylhydroxytoluene) and scavengers (such as epichlorhydrin).

It will be understood that what we will claim may comprise:

(a) compounds of Formula (I);

(b) processes for the preparation of compounds of Formula (I);

(c) insecticidal and acaricidal compositions comprising a compound of Formula (I) in admixture with a carrier;

(d) processes for the preparation of such pesticidal compositions;

(e) methods for the control of insect or acarine pests comprising the application to the pest or its environment of a compound of Formula (I);

(f) synergised pesticidal compositions comprising a compound of Formula (I);

(g) potentiating or non-potentiating mixtures of a compound of Formula (I) and another pesticidal compound; and

(h) novel intermediates of the preparation of compounds of Formula (I), particularly compounds of Formula (II)

The following Examples illustrate, in a non-limiting manner, preferred aspects of the invention. All temperatures are in degrees Celsius.

Example I Triethyl-4-phosphono-3-methylcrotonate

A mixture of ethyl 3,3-dimethylacrylate (I2.8g, I00 mmol), N -bromosuccinimide (II.8g, 66 mmol), dry benzene (50 ml) and benzoyl peroxide (20 mg) was heated under reflux for 0.5h. After cooling, filtration, concentration and distillation, ethyl 4-bromo-3-methyl-crotonate was obtained. The latter (33.8 mmol) was added dropwise to triethylphosphite (47.I7 mmol) at I00°. The mixture was warmed to I50° and the residue purified by distillation to give triethyl 4-phosphono-3-methylcrotonate (b.p. I20° at 0.5 mm.Hg) as a cis /trans mixture.

Example 2 N-Isobutyl II-(3,5-bistrifluoromethylbenzyloxy)-3-methylundeca-2,4-dienamide

7-(3,5-bis trifluoromethylbenzyloxy)-heptan-I-al (4.7g, I3.27 mmol) (prepared according to methods described in EP-A-I64 I87) was reacted with the anion derived from the compound of Example I (I3.27 mmol) and lithium diisopropylamide (I3.27 mmol) in dry tetrahydrofuran in the absence of moisture from -40° to room temperature. After standard work-up and purification on column chromatography (silica/85:I5 hexane:ether), ethyl II-(3,5-bis trifluoromethylbenzyloxy)-3-methyl-undeca-2,4--dienoate was obtained.

The above ester (10.2 mmol) was hydrolysed by potassium hydroxide (41.2 mmol) in aqueous ethanol at room temperature over 24 hours. After standard work-up, the residue was triturated with hexane to give (2E ,4E ) 11-(3,5-bis trifluoromethylbenzyloxy)-3-methylundeca-2,4--dienoic acid.

The above acid (0.5 mmol) was treated sequentially with triethylamine (0.5 mmol) and phenyl N -phenylphosphoramidochloridate (0.5 mmol) in dichloromethane in the absence of moisture. After 30 mins, triethylamine (0.5 mmol) and isobutylamine (0.5 mmol) were added sequentially and after 16 hours at room temperature the reaction was worked up in standard fashion. The crude material was purified by flash column chromatography (silica/80:20 ether:hexane) to give (2E ,4E ) N -isobutyl-11-(3,5-bis trifluoromethylbenzyloxy(-3-methylundeca-2,4--dienamide as a pale yellow oil. Glc, 3% OV210 at 250°, retention time 2.9 min; tlc, $R_f$ (silica-ether) 0.58; NMR; 7.61 ppm (3H), S, aromatic; 5.81, (3H), 4,H5,NH;5.49, (1H),S,H2; 4.42,-(2H), S, benzylic $CH_2$; 3.44,(2H), t,H11; 2.20, (3H), S(bd), Me; 2.22,(3H),m, H6,$Bu^i$; 1.37, (8H),m,H7,8,9,10;3.20-(2H),d of d; 0.94,(6H)d,$Bu^i$.

The following compounds, all (2E , 4E ) unless otherwise stated, were prepared similarly:

Example 3 N -2,2-Dimethylpropyl 11-(3,5-bis trifluoromethylbenzyloxy)-3-methylundeca-2,4-dienamide. tlc; $R_f$(silica-ether) 0.52

Example 4 N -1-methylpropyl 11-(3,5-bis trifluoromethylbenzyloxy)-3-methyl-2,4-dienamide

tlc; $R_f$(silica-ether) 0.43.

Example 5 N -1,2-dimethylpropyl 11-(3,5-bis trifluoromethylbenzyloxy)-3-methylundeca-2,4-dienamide.

Trimethylaluminium (4.2 mmol) in dry toluene was treated with 1,2-dimethlpropylamine (4.2 mmol) at -10°. After 30 mins (0° room temp) the ester of Example 1 (3.82 mmol) in toluene was added. The mixture was heated under reflux for 6h in the absence of moisture and oxygen, treated with aqueous hydrochloric acid and worked up in standard fashion. The crude material was purified (silica/1:1 ether:hexane) by column chromatography to give (2E/Z ,4E ) N -1,2-dimethylpropyl 11-(3,5-bis trifluoromethylbenzyloxy)-3-methylundeca-2,4-dienamide as a pale yellow oil. (85:15 2E ,4E :2Z ,4E ). Glc; OV210 at 250°, $R_t$ 2.2,1.5 mins; tlc, silica-ether, $R_f$ 0.60.

Example 6 N -isobutyl 11-(3,5-bis trifluoromethylbenzyloxy) -5-methyl-undeca-2,4-dienamide.

7-(3,5)-(Bis trifluoromethylbenzyloxy)-heptan-1-al (26.5 mmol) was reacted in dry ether with methyl magnesium iodide (26.5 mmol) and worked up in conventional fashion. The crude material was purified by column chromatography to give 8-(3,5-bis trifluoromethylbenzyloxy)-octan-2-ol.

The above alcohol (16.17 mmol) was oxidised using methods described in EP-A-164 187 (Swern oxidation, DMSO, oxalyl chloride, triethylamine) to give 8-(3,5-bis trifluoromethylbenzyloxy)-octan-2-one. The ketone was reacted with triethyl-4-phosphonocrotonate/lithium diisopropylamide to give ethyl 11-(3-5-bis trifluoromethyl)benzyloxy-5-methylundeca-2,4-dienoate. The ester was converted into the amide as in Example 5.

The product was purified by preparative reverse phase HPLC (85% methanol - 15% water) to give (2E ,4E )N -isobutyl 11-(3,5-bistrifluoromethylbenzyloxy)-5-methyl-undeca-2,4-dienamide as a yellow oil. Glc. OV210 at 270° $R_t$ 6.2 mins; tlc, silica-ether, $R_f$ 0.48, NMR; 7.75,(3H), S,aryl; 7.52, (1H), d of d, H3; 5.95, (1H)-,d,H4; 5.85,(1H), NH; 5.75, (1H),d,H2; 4.56, (2H), S, benzylic; 3,52,(2H),t,H11; 2.12, (2H),t,H6; 1.65-1.3,(8H)-,H7,8,9, 10; 1.85, (3H),S,Me; 3.16,(2H),d of d, 1.8,(1H),m,0.91, (6H),d,isobutyl.

Example 7 (2E , 4E ) N -1,2-dimethylpropyl 11-(3,5-bis trifluoromethylbenzyloxy) 5-methyl-undeca-2,4-dienamide.

The compound was prepared as in Example 6. tlc, silica-ether $R_f$ 0.52.

Example 8 (2E , 4E )N-isobutyl 11-(3,5-bistrifluoromethylbenzyloxy)-3,5-dimethylundeca-2,4-dienamide.

8-(3,5-bis trifluoromethylbenzyloxy)octan-2-one was reacted with triethyl 4-phosphono-3-methylcrotonate/lithium diisopropylamide to give an ester which was converted as in Example 5 into (2E ,4E ) N -isobutyl ll-(3,5-bis trifluoromethylbenzyloxy)-3,5-dimethylundeca-2,4-dienamide. Pale yellow oil, tlc (silica-ether) $R_f$ 0.59; NMR; 7,80,(3H),S,aryl; 5.69, (lH),S,H4; 5.54, (lH),S,H2; 4.60, (2H), S, benzylic, 3.54, (2H), t,Hll; 2.24, (3H), S, 3Me; 2.08, (2H),t,H6; l.83, (3H),S,5Me; l.75-l.3, (8H), H7,8,9l0; 3.l5, (2H),d of d, l.8, (lH), m, 0.92, (6H), d, isobutyl.

The following compounds were prepared similarly:

Example 9 (2E,4E)N-isobutyl 9-(l-naphthyloxy)-3-methylnona-2,4-dienamide (yellow oil), starting from a reaction of l-naphthol and bromopentanol in dimethylformamide in the presence of sodium hydride, the bromopentanol having been prepared from pentanediol and hydrobromic acid.

Example l0 (33% 2E,4E,67%2Z,4E) N-l,2-dimethylpropyl 9-(l-napthyloxy)-3-methylnona-2,4-dienamide (yellow oil)

Example ll (67% 2E,4E; 33%2Z,4E)N-l,2-dimethylpropyl 9-(l-naphthyloxy)-3-methylnona-2,4-dienamide (yellow oil)

Example l2 N -Isobutyl ll-(3,5-bistrifluoromethylbenzyloxy)-3-ethyl-undeca-2,4-dienamide.

7-(3,5-bistrifluoromethylbenzyloxy)heptan-l-al (See Example 2, 4.97g, l3.96 mmol) was reacted with carboethoxymethylene triphenylphosphorane (4.86g, l3.96 mmol, Lancaster Synthesis Ltd., U.K.) in dry dichloromethane to give ethyl 9-(3,5-bistrifluoromethylbenzyloxy)nona-2-enoate (5g). The ester (5g, l3.55 mmol) was reacted with diisobutylaluminium hydride (27 mmol) in toluene-dichloromethane at -30°. After conventional work-up, 9-(3,5-bistrifluoromethylbenzyloxy)nona-2-en-l-ol (4.43g) was obtained. The alcohol was converted into 9-(3,5-bistrifluoromethyl-benzyloxy)nona-2-en-al by Swern oxidation (oxalyl chloride-dimethylsulphoxide, see EP-A-l64 l87).

The above aldehyde (4.47g, l5.l3 mmol) was reacted in dry ether with ethyl magnesium bromide prepared from magnesium (0.36g, l5.l3 mmol) and bromoethane (l,65g, l5.l3 mmol). After conventional work-up with ammonium chloride, the crude product was purified by chromatography (silica, ether:hexane) to give ll-(3,5-bistrifluoromethylbenzyloxy)undeca-4-ene-3-ol which was converted by Swern oxidation into ll-(3,5-bistrifluoro methylbenzyloxy)undeca-4-ene-3-one.

n-Butyl lithium (4.99 mmol) in hexane was added to N -isopropyl cyclohexylamine (0.69 g, 4.88 mmol, Aldrich Chem. Co.) in dry tetrahydrofuran (20 ml) at -78° under nitrogen. After l5 mins, ethyl trimethylsilylacetate (0.78 g, 4,88 mmol, Fluka Chem. Co.) was added. After a further l0mins, ll-(3,5-bistrifluoromethylbenzyloxy) undeca-4-ene-3-one (l g, 2.44 mmol) was added and the temperature was allowed to reach room temperature. After conventional work-up and chromatography on silica, ethyl ll-(3,5-bistrifluoromethylbenzyloxy)-3-ethyl-undeca-2,4-dienoate was obtained as a mixture of two isomers.

The above esters (0.8 g, l.67 mmol) were treated with a complex prepared from isobutylamine (0.l8 ml, l.84 mmol) and trimethyl aluminium (l.84 mmol) in toluene (see Example 5). After chromatography, (2E , 4E ) N -isobutyl ll-(3,5-bistrifluoromethylbenzyloxy)-3-ethyl-undeca-2,4-dienamide was obtained as a yellow oil. Glc, 3% OV2l0 at 250°, retention time l.6 min; tlc, $R_f$ (silica-ether) 0.64; NMR 7.8l (3H), aromatic; 6.03 (lH)-,m,H5; 5.92 (lH),d,H4; 5.52 (lH),s,H2; 5.45 (lH), NH; 4.62 (2H),s,benzylic; 3.52 (2H),t,Hll; 2.8l (2H), q, l.ll (3H)-,t, 3-Et; 2.l8 (2H),m,H6; l.3-l.7 (8H), satd.chain; 3.23 (2H)t, l.80 (lH),m, 0.94 (6H),d,isobutyl.

Example l3 N-Isobutyl ll-(3,5-bistrifluoromethylbenzyloxy)-3-fluoromethylundeca-2,4-dienamide.

l-Chloro-3-fluoro-prop-2-one (l6.l g, l46 mmol, Bergmann & Cohen, J. Am. Chem Soc ., l958 , 2259) in dichloromethane was treated with carboethoxy-methylene-triphenylphosphorane (50.5 g, l46 mmol). After 48 hours at room temperature, the reaction was worked up in conventional fashion and purified by column chromatography (silica-ether hexane) to give ethyl 4-chloro-3-fluoro-methylcrotonate. The latter (l8 g, l00mmol) was added at l00° to triethylphosphite (23.3 g, l40 mmol). The mixture was warmed to l50°, maintained at that temperature for 6 hours and subjected to distillation to give triethyl 3-fluoromethyl-4-phosphonocrotonate (2l g) (bp (l mm) l40 - 50°).

The above phosphonate (3 g, ll23 mmol) was reacted with lithium diisopropylamide (ll.23 mmol) and the

resultant anion reacted with 7-(3,5-bistrifluoromethylbenzyloxy)-heptan-l-al (4 g, ll.23 mmol) in dry THF (as in Example l). After work-up and purification, ethyl ll-(3,5-bistrifluoromethylbenzyloxy)-3-fluoromethyl-undeca-2,4-dienoate (3.95 g) was obtained. The ester was converted to the dienoic acid and then as in Example l to give (2E ,4E ) N -isobutyl ll-(3,5-bistrifluoromethylbenzyloxy)-3-fluoromethylundeca-2-,4-dienamide as a yellow oil. ($R_f$, silica/ether, 0.64). NMR: 7.8l (3H),s,aromatic; 6.22 (lH)m,H; 6.05 (lH),d,H; 5.72 (lH),s,H2; 5.64 (2H),d,$CH_2F$; 5.68 (lH), NH; 4.62 (2H),s,benzylic; 3.56 (2H),t,Hll; 2.29 (2H),m,H6; l.3-l.7 (8H), saturated chain; 3.26 (2H),t,l.80 (lH),m, 0.95 (6H),d,isobutyl.

Example l4 N-l,2-Dimethylpropyl ll-(3,5-bistrifluoromethylbenzyloxy)-3-fluoromethyl-undeca-2,4-dienamide.

Prepared as in Example l3.
$R_f$ (silica/ether) 0.66.

Example l5 N-isobutyl l2-(2-naphthyloxy)-3-methyldodeca-2,4-dienamide

Prepared as in Example 5, starting from 2-naphthol and bromooctanol, the latter being prepared from octanediol and hydrobromic acid mp 84-6°.

An alternative synthesis is given in more detail below :

(a) A mixture of ethyl 3-methylbut-2-enoate (l0.lg), N-bromosuccinimide (l4g) and benzoyl peroxide (0.lg) in dry carbon tetrachloride (l50 ml) was stirred under reflux for 3h, filtered, solvent evaporated under reduced pressure and residue distilled to yield ethyl (E/Z-4-bromo-3-methylbut-2-enoate (9.4g, b.pt. l00-l05° l5mmHg. $n_D$=l.4863.) which was then added dropwise to triethyl phosphite (3.lg) at l00°. The temperature was slowly raised to l50°C and the ethyl bromide formed allowed to distil over. After 2h, the residue was distilled to give ethyl (E/Z-4-diethylphosphono)-3-methylbut-2-enoate (2.lg, b.pt. l06-l20°C at 0.2mmHg. $n_D$ = l.4555.). An earlier fraction (l.2g) from the distillation also contained mainly the required products.

(b) A mixture of 2-naphthol (2.8g), 8-bromo-tetrahydropyranyl octan-l-ol (5.4g), 50% aqueous sodium hydroxide (llg) and tetrabutylammonium bromide (0.6g) was stirred at 90° for 2h. The reaction mixture was cooled to room temperature, diluted with water, extracted with ether (x3), washed with water, then dilute HCl, dried and solvent evaporated under reduced pressure to give 2(8-(Tetrahydropyran-2-yl)-(octyloxy)(naphthalene (2-Naphthyl-O-$(CH_2)_8$OTHP) (6.8lg, $n_D$ = l.5380) which was then (6.8g) mixed with Amberlyst (Regd T.M.) Al5 (l.9g) and methanol (l20 ml) was stirred at 65°C for l6h, filtered, diluted with water, extracted with dichloromethane (x3), washed with dilute HCl, and the solvent evaporated under reduced pressure to give 2(8-Hydroxyoctyloxy) naphthalene (2-Naphthyl-O-$(CH_2)_7CH_2OH$) (3.8g) m.pt 67-68°C. Pyridinium chlorochromate (0.6g) was added to a solution of the 2(8-hydroxyoctyloxy)-naphthalene (0.5g) in dichloromethane (2.5 ml) and the mixture stirred at 20°C. Petroleum ether b.p. 60-80°C (25 ml) was added and after stirring for a further l0 min., filtered through a pad of charcoal/celite. The solvent was evaporated under reduced pressure and 2(8-Oxooctyloxy)- naphthalene (2-Naphthyl-O-$(CH_2)_7CHO$) purified by thin layer chromatography on silica eluted with 20% diethyl ether in petroleum ether b.pt 60-80°C. Yield 0.2g., $n_D$ = l.5570.

(c) Sodium methoxide was prepared by reacting sodium (95 mg) with dry methanol (l.5 ml). The solvent was removed under reduced pressure and replaced by dry DMF (8 ml). A solution of the ethyl 4-(diethylphosphono)-3-methylbut-2-(E/Z)-enoate (0.96g) from step (a) in dry DMF (5 ml) was then added over 2 min. After 5 min, a solution of the aldehyde from step (b) (0.9g) in dry DMF (5 ml) was added dropwise. The mixture was stirred at 20°C for 3h, poured onto dil. HCl, extracted with diethyl ether (x3), washed with water, dried and the solvent removed under reduced pressure to give 2-(l0-Methyl-ll-methoxycarbonyldec-8(E), l0(E/Z)-dienyloxy) naphthalene (2-Naphthyl-O-$(CH_2)_7$-CH=CH-C($CH_3$)-=$CHCO_2Me$). Yield 0,42g $n_D$ = l.5740.

A mixture of the later (0.46g), ethanol (20 ml) and 7% aqueous sodium hydroxide (2 ml) was stirred under reflux for l hour and poured onto water. The precipitate was filtered off, shaken with dilute HCl, extracted with diethyl ether (x3), dried and the solvent removed under reduced pressure to give the product as pure E isomer (0.l4g, m.pt. 84-85°C). The filtrate was acidified with dilute HCl and extracted with diethyl ether (x3). The combined extracts were dried and the solvent evaporated to give 2(l0-Methyl-ll-carboxyldeca-8(E), l0(E/Z)-dienyloxy naphthalene (2-Naphthyl-O-$(CH_2)_7$-CH=CH-C($CH_3$)-=$CHCO_2H$). The residue was recrystallised from diethyl ether/petroleum ether b.pt. 60-80°C to give a further quantity of the E-isomer (80 mg) and the Z isomer removed in the mother liquor as a semi-solid which was used without further purification.

Finally, 2(l0-methyl-ll-carboxydeca-8(E), l0(E)-dienyloxy)naphthalene (8 mg) was stirred with oxalyl chloride (l ml) and dry benzene (5 ml) for 3h. The solvents were removed under reduced pressure and the acid chloride redissolved in dry diethyl ether (3 ml). A solution of isobutylamine (0.5 ml) in dry diethyl ether (5 ml) was then added dropwise. The mixture was stirred at 20° C for 2h, poured onto dilute HCl, extracted with diethyl ether (x3), dried and the solvent evaporated. The product was recrystallised from diethyl ether and petroleum ether b.pt. 60-80° C to give the title product m.pt. 83-85° C.

Alternatively the 2(8-tetrahydropyran-2-yl) (octyloxy)naphthalene (i.e. 2-Naphthyl-O-$(CH_2)_8$-OTHP) may be produced as follows. A mixture of 8-(2'tetrahydropyranyloxy)-octanol (2.35g), N,N'-dicyclohexyl-carbodiimide (2.5g) and 2-naphthol (l.6g) is stirred and heated at l00° C for 20 hours. After cooling, water and chloroform are added and the mixture separated. The organic solution is washed with dilute hydrochloric acid, saturated sodium hydrogen carbonate solution, dried over sodium sulphate and evaporated to yield the product, $n_D$ = l.5370.

Example l6 N-l-methylpropyl l2-(2-naphthyloxy)-3-methyldodeca-2,4-dienamide

Prepared as in Example 5 m.p. 65-8°

Example l7 N-isobutyl ll-(2,3,4,5,6-pentafluorobenzyloxy)-3-methylundeca-2,4-dienamide

Prepared as in Example 5, starting from pentafluorobenzyl bromide
$R_f$ (silica/ether) 0.57
70% (2E ,4E ) 30% (2Z ,4Z )

Example l8 N-l,l,2-trimethylpropyl ll-(3,5-bistrifluoromethylbenzyloxy)-3-methylundeca-2,4-dienamide

Prepared as in Example l, starting from 3,5-bis(trifluorometnyl)phenol
$R_f$ (silica/ether) 0.70
l:l (2E :4E ) : (2Z ,4Z )

Example l9 N-Isobutyl ll-(2,4-dichlorobenzyloxy)-3-methylundeca-2,4-dienamide

Prepared as in Example 5
$R_f$ (silica/ether) 0.60
75% (2E ,4E ) 25% (2Z ,4E )

Example 20 N-Isobutyl l2-(3,5-bistrifluoromethylpenoxy)-3-methyldodeca-2,4-dienamide

Prepared ad in Example 5
$R_f$ (silica/ether) 0.63
85% (2E ,4E ) l5% (2Z ,4E )

Example 2l N-Isobutyl ll-(3,5-bistrifluoromethylbenzyloxy)-3-trifluoromethyl-undeca-2,4-dienamide

Cis - (E ) 3-trifluoromethyl triethylphosphonocrotonate was prepared according to Liu et al (J.Am. Chem. Soc., l982, l04,4979) and reacted with 7-(3,5-bistrifluoromethylbenzyloxy)-heptan-l-al as in Example 2 to give an ester which was reacted with trimethyl aluminium and isobutylamine as in Example 5 to give the title compound as a yellow oil. $R_f$ (silica/l:l ether:hexane) 0.54
> 98% 2-cis , 4-trans (2E , 4E )
'H NMR (olefinics): 7.l9,(d,lH),H4; 6.26,(M,lH),H5; 6.l6,(s,lH),H2.

Example 22 2-(l0-methyl-l2(2,2-dimethylpropylamino)-l2-oxo-dodec8(E), l0(E/Z)-dienyloxynaphthalene m.pt. 93-6° C

The above compound was prepared by a procedure similar to that described in Example l5.

Example 23 2-(l0-methyl-l2(2-methylbutylamino)-l2-oxo-dodec-8(E), l0(E/Z)dienyloxynaphthalene

The above compound was prepared by a procedure similar to that described in Example l5.

Example 24 2-(l0-methyl-l2(l,2-dimethylpropylamino)-l2-oxododec-8(E), l0(E/Z)dienyloxynaphthalene

The compound was prepared by a procedure similar to that described in Example l5.

Example 25 6-Bromo-2-(l0-methyl-l2(2,2-dimethylpropylamino-l2-oxo-dodec-8(E), l0(E/Z)-dienyloxynaphthalene

This compound was prepared as in Example l5, via the following intermediates:
6-Bromo-2-(8-(Tetrahydropyran-2yl)-octyloxy)naphthalene ($n_D$l.5432).
6-Bromo-2-(8-hydroxyoctyloxy)naphthalene (m.p. 59-6l° C)
6-Bromo-2-(8-oxooctyloxy)naphthalene (m.p. 49-5l° C)
6-Bromo-2-(l0-methyl-ll-methoxycarbonyl dec-8(E),l0(E/Z)-dienyloxy)naphthalene $n_D$ l.5433.

In the final steps, trimethylaluminium (2M, l ml) in hexane was added dropwise to a stirred solution of isobutylamine (0.2 ml) in dry benzene (2 ml) at 20° C under an atmosphere of nitrogen. After l5 min. a solution of the above ester (0.lg) from D in dry benzene (l ml) was added and the mixture stirred under reflux for l6h, cooled to 20° C and dilute hydrochloric acid (l0 ml) added cautiously. The mixture was stirred for 30 min. extracted with dichloromethane, dried and the solvent evaporated. The residue was purified by thin layer chromatography on silica eluted with 60% ether/petroleum ether to give the title product m.p. 79-8l° C.

## Biological Activity

### A.Topical application versus house flies

Compounds of the invention were administered topically in Cellosolve solution, with or without 6 μg piperonyl butoxide,to adult female *Musca domestica* (WRL strain). The results, in terms of % kill, are given in Table l.

In addition the compounds of Examples 9-l4 showed activity at ≼ 3 μg (+6 ug PB).

### B.Activity versus grain pests

Approximately 20 each of *Sitophilus granarius* and *Tribolium castaneum* adults are placed in a tube of l5 g grain onto which l.5 ml of a 0.2% w/v solution of the compound has been pipetted and left to dry. % Mortality at 7 days is given in Table 1.

Table 1

| | M.domestica | | | S.g. | T.c. |
|---|---|---|---|---|---|
| Compound of Example No. | Dose (µg) | -PB | +PB | | |
| 2 | 0.6 | 77.5 | 100 | 89 | 0 |
| 3 | 0.6 | 53 | 100 | - | - |
| 4 | 0.6 | 24 | - | 36 | 0 |
| | 0.12 | - | 84 | - | - |
| 5 | 0.6 | 5 | 100 | 38 | 0 |
| 6 | 1.5 | 19 | - | - | - |
| | 0.3 | - | 50 | - | - |
| 7 | 0.3 | - | 52 | - | - |
| 8 | 3 | 0 | 0 | 4 | 12 |

C.Activity versus blowfly

The compounds of Example 2 and 5 had an effective dose of <cl0 ppm against Lucilia cuprina .

D.Activity versus mosquito

Against Culex fatigans in a wind tunnel, the compounds of Examples 2 and 5 each had an $LC_{50}$ of <l% in OPD/dichloromethane solution.

E.Trackspray

When sprayed as an acetone:water:wetters emulsion (5:94.5:0) the following examples showed activity at <l000 ppm sprayed against:

| | |
|---|---|
| M. domestica: | 2, 9, 11, 12, 15, 16, 17, 19, 20 |
| C. quinquefasciatus: | 9, 11 |
| A. aegypti: | 9 |
| P. xylostella: | 2, 4, 9, 11, 12, 15, 16, 17, 19, 20 |
| M. persicae: | 2, 3, 4, 11, 12 |
| T. urticae: | 2, 3, 4, 15, 16, 17, 18, 19, 20 |

F.Spodoptera littoralis

The compound of Example 2 showed activity against larvae of S. littoralis when topically applied at l0µg/larva.

Examples I5, I6, I7, I9, 20 showed activity against larvae of S.littoralis when injected at 5-μg/larva.

G.Comparative example

The compound of Example 2 was compared with the compound of Example 4 of EP-A-I74 I87, namely the analogue lacking the 3-methyl group. When applied as deposits on glass, the following results were obtained.

| Compound | $LC_{50}$ (mg.$m^{-2}$) | |
|---|---|---|
| | A. aegypti | C.quinquefasciens |
| Ex. 2 | c40 | c40 |
| prior art analogue | >200 | >200 |

When applied as acetone solutions to Spodoptera littoralis larvae, Ex. 2 had $LD_{50}$ - 2 μg and the analogue had $LD_{50}$ >I0 μg.

Illustrative compounds in of Examples I5 and 22 to 25 are set out in Table 2 with physical constants and bioassay date.

Compounds of Formula (I) are bioassayed by the following method:

Acetone solutions (1μ1) of compounds are applied topically by Arnold micro-applicator to the thorax of 4-day adult female houseflies (HF) (not the same strain as in Example A above), anaesthetised with ether, or to the ventral abdomen of approximately I-week- old adult male and female mustard beetles (MB), held by suction tube. For each concentration, and for a control, two replicates, each of I5 insects, are dosed topically and the dead counted after 24 hours (HF) or 48 hours (MB); at these times end point mortalities are approached.

The results are analysed by the method of probits, to give for each test $LD_{50}$ values and standard errors for each compound, and for the standard (bioresmethrin). Comparisons between $LD_{50}$S and compound and standard give relative potencies (bioresmethrin = I00).

TABLE 2

$ArO(CH_2)_mCH_2(CH_2)_nCH{=}CH\ CE^3{=}CHCONHZ$

| Compound of Ex.No | Ar | m+n | $E^3$ | Z | Configuration at C=C-CO | mp | HF | MB |
|---|---|---|---|---|---|---|---|---|
| 15 | 2-naphthyl | 6 | $CH_3$ | $CH_2CH(CH_3)_2$ | E | 83-5°C | 0.4 | 37 |
| 22 | 2-naphthyl | 6 | $CH_3$ | $CH_2C(CH_3)_3$ | E/Z | 93-6°C | NT | 5.8 |
| 23 | 2-naphthyl | 6 | $CH_3$ | $CH_2CH(CH_3)C_2H_5$ | E/Z | Semi Solid | 1.0 | 11 |
| 24 | 2-naphthyl | 6 | $CH_3$ | $CH(CH_3)CH(CH_3)_2$ | E/Z | Semi Solid | ca.0.2 | 6.4 |
| 25 | 6-bromo-2-naphthyl | 6 | $CH_3$ | $CH_2CH(CH_3)_2$ | mainly E | 64-67° | NT | 10 |

(N.T.: non-toxic at concentrations used)

## Formulations

### 1. Emulsifiable Concentrate

| | |
|---|---|
| Compound of Example 2 | 10.00 |
| Ethylan KEO | 20.00 |
| Xylene | 67.50 |
| Butylated Hydroxyanisole | 2.50 |
| | 100.00 |

### 2. Wettable Powder

| | |
|---|---|
| Compound of Example 2 | 25.00 |
| Attapulgite | 69.50 |
| Sodium isopropylbenzene sulphonate | 0.50 |
| Sodium salt of condensed naphthalene sulphonic acid | 2.50 |
| Butylated hydroxytoluene | 2.50 |
| | 100.00 |

3. Dust

| | |
|---|---|
| Compound of Example 2 | 0.50 |
| Butylated Hydroxyanisole | 0.10 |
| Talc | 99.40 |
| | 100.00 |

4. Bait

| | |
|---|---|
| Compound of Example 2 | 40.25 |
| Icing Sugar | 59.65 |
| Butylated hydroxy toluene | 0.10 |
| | 100.00 |

5. Lacquer

| | |
|---|---|
| Compound of Example 2 | 2.50 |
| Resin | 5.00 |
| Butylated Hydroxy anisole | 0.50 |
| High aromatic white spirit | 92.00 |
| | 100.00 |

6. Aerosol

| | |
|---|---|
| Compound of Example 2 | 0.30 |
| Butylated Hydroxy anisole | 0.10 |
| 1,1,1-Trichloroethane | 4.00 |
| Odourless Kerosene | 15.60 |
| Arcton, 11/12. 50:50 mix | 80.00 |
| | 100.00 |

7. Spray

| | |
|---|---|
| Compound of Example 2 | 0.10 |
| Butylated Hydroxy anisole | 0.10 |

| | | |
|---|---|---|
| | Xylene | 10.00 |
| | Odourless Kerosene | 89.80 |
| | | 100.00 |
| 8. | Potentiated Spray | |
| | Compound of Example 2 | 0.10 |
| | Permethrin | 0.50 |
| | Butylated Hydroxyanisole | 0.10 |
| | Xylene | 10.10 |
| | Odourless Kerosene | 89.20 |
| | | 100.00 |

## Claims

1. A compound of Formula (I)

(I) $Ar(CH_2)_xO(CH_2)_mA(CH_2)_n(CE^1=CE^2)_a(CE^3=CE^4)CONR^1Z$

wherein Ar is phenyl or naphthyl, in either case unsubstituted or substituted by one or more of $C_{I-6}$ alkyl, halogen, $C_{I-6}$ alkoxy, $C_{I-6}$ alkyl optionally substituted by halo, or $C_{I-6}$ alkoxy optionally substituted by halo
x = 0 or I
m = I to 7
n = I to 7
A = $CH_2$ or oxygen
a = 0 to I
$R^1$ is independently selected from hydrogen, $C_{1-6}$ alkyl and $C_{3-6}$ cycloalkyl (either of which may be substituted by one or more of halo, $C_{I-6}$ alkyl, $C_{2-6}$ alkenyl, $C_{2-6}$ alkoxy, $C_{2-6}$ alkynyl, dioxalanyl and $C_{3-6}$ cycloalkyl
Z represents hydrogen or a group:

$-C^1(R_A)(R_B)-C^2(R_C)(R_D)(R_E)$

wherein $R_A$ and $R_B$, which may be identical or different, each represent hydrogen or methyl; $R_C$ represents methyl, $R_D$ represents methyl, ethyl, n -propyl, iso propyl, t -butyl or vinyl; and $R_E$ represents hydrogen or methyl, or wherein $R_C$ and $R_D$ form a methylene group ($=CH_2$) or together with $C^2$ form a cyclopropane or cyclobutane ring, $R_A$, $R_B$ and $R_E$ representing hydrogen or methyl, or wherein $R_A$ and $R_C$ together with $C^1$ and $C^2$ form a cyclobutane ring, $R_B$, $R_D$ and $R_E$ independently representing hydrogen or methyl:
$E^1$, $E^2$, $E^3$ and $E^4$ are independently selected from hydrogen, $C_{1-4}$ alkyl, optionally substituted by halo, or nitrile, provided that at least one of $E^1$, $E^2$, $E^3$ and $E^4$ is optionally substituted alkyl or nitrile except that (2E , 4E ) N-isobutyl 3-methyl-12-(3-chlorophenoxy)-dodeca-2,4-dienamide is excluded and provided that one but only one of $R^1$ and Z is hydrogen.

2. A compound according to Claim I wherein Ar is phenyl substituted by one or more halogen or trifluoromethyl groups.

**3.** A compound according to Claim I or 2 wherein a is I.

**4.** A compound according to any one of the preceding claims wherein A is $-CH_2-$ and the sum of m and n is equal to an odd number.

**5.** A compound according to any one of the preceding claims wherein $R^1$ is hydrogen and Z is $C_{I-5}$ alkyl.

**6.** A compound according to any one of the preceding claims wherein the stereochemistry of the or each double bond conjugated to the amide carbonyl is trans .

**7.** A compound according to any one of the preceding claims wherein $E^1$, $E^2$ and $E^4$ are hydrogen and $E^3$ is methyl, fluoromethyl or trifluoromethyl.

**8.** N-isobutyl II-(3,5-bistrifluoromethylbenzyloxy)-3-methylundeca-2,4-dienamide, N-isobutyl I2(2-naphthyloxy)-3-methyldodeca-2,4-dienamide, N-isobutyl II-(2,4-dichlorobenzyloxy)-3-methylundeca-2,4-dienamide and N-isobutyl I2-(3,5-bistrifluoromethylphenoxy)-3-methyl-dodeca-2,4-dienamide (in each case 2E, 4E).

**9.** A process for preparing a compound according to Claim I:

(a) by amidation of the corresponding acid or acid derivative, i.e. by reaction of a compound of Formula

(II) with a compound of Formula (III).

(II) $Ar(CH_2)_xO(CH_2)_mA(CH_2)_n(CE^1=CE^2)_a(CE^3=CE^4)COZ^1$

(III) $HNR^1Z$

wherein $Z^1$ is hydroxyl, halo, a phosphoroimidate ester (-P(→0)(OAryl)NH.aryl) or alkoxy and the other variables are as defined in Claim I;

(b) by reaction of a compound of Formula (IV) with a compound of Formula (V):

(IV) $Ar(CH_2)_xO(CH_2)_mA(CH_2)_n(CE^1=CE^2)_pZ'$

(V) $Z''CONR^1Z$

where one of Z′ and Z″ is $-C(O)E^5$ and the other is $(Z^2)_3P=CE^6(CE^3=CE^4)_q$ or $(Z^2)_2P(O)=CE^6-(CE^3=CE^4)_q$, wherein $Z^2$ is $C_{1-4}$ alkyl, $C_{1-4}$ alkoxy (preferably ethoxy) or aryl (preferably phenyl), p and q are each 0 or I and p+q is 0 or I, $E^5$ is $E^1$ or $E^3$ and $E^6$ is $E^2$ or $E^4$, as appropriate;

(c) by an elimination reaction on a compound of Formula (VI) or (VII):

(VI) $Ar(CH_2)_xO(CH_2)_mA(CH_2)_n(CE^1=CE^2)CE^3(X)CE^4(Y)CONR^1Z$

(VII) $Ar(CH_2)_xO(CH_2)_mA(CH_2)_nCE^1(X)CE^2(Y)(CE^3=CE^4)CONR^1Z$

where one of X and Y is hydrogen and the other is a group Q( →O)L, in which Q is sulphur or selenium and L is a suitable group.

(d) by reacting a compound of Formula (VIII) with a compound of Formula (IX):

(VIII) $Ar(CH_2)_xO(CH_2)_mA(CH_2)_nCE^1=CE^2-M$

(IX) $Hal-CE^3=C^4)CONR^1Z$

wherein Hal is halide and M is a silicon or a metal atom or metal-containing group;

(e) by reaction of a compound of Formula (X) with a compound of Formula (XI):

(X) $Ar(CH_2)_xZ^3$

(XI) $Z^4-(CH_2)_mA(CH_2)_n(CE^1=CE^2)_a(CE^3=CE^4)CONR^1Z$

wherein one of $Z^3$ and $Z^4$ is -OH and the other is -OH or a suitable leaving group;

(f) when A is oxygen, by reaction of a compound of Formula (XII) with a compound of formula (XIII):

(XII) $Ar(CH_2)_xO(CH_2)_mZ^5$

(XIII) $Z^6-(CH_2)_n(CE^1=CE^2)_a(CE^3=CE^4)CONR^1Z$

where one of $Z^5$ and $Z^6$ is -OH and the other is a suitable leaving group;

(g) by reacting a compound of Formula (XIV) with one of Formula (XV) or (XVI):

(XIV) $Ar(CH_2)_xO(CH_2)_mA(CH_2)_nCE^1=CE^2-Hal$

(XV) $HCE^3=CE^4CONR^1Z$ (XVI) $E^3C{\equiv}CE^4CONR^1Z$

where Hal is halogen, followed by semihydrogenation of the triple bond, if present;

(h) by semi-hydrogenation of the triple bond in a compound of Formula (XVII) or (XVIII):

(XVII) $Ar(CH_2)_xO(CH_2)_mA(CH_2)_n-C{\equiv}C-(CE^3=CE^4)_bCONR^1Z$

(XVIII) $Ar(CH_2)_xO(CH_2)_mA(CH_2)_n-(CE^1=CE^2)_a-C{\equiv}C-CONR^1Z$

wherein a and b are both I;

(i) by conversion of one compound of Formula (I) prepared as above into another compound of Formula (I) by any suitable process.

**10.** A pesticidal composition comprising a compound according to Claim I and one or more diluents, carriers etc.

**11.** A method of combatting pests by applying to the pest or its locus a compound according to Claim I or a composition according to Claim I0.

Claims for the following Contracting States: ES

**1.** A process for preparing a compound of Formula (I)

(I) $Ar(CH_2)_xO(CH_2)_mA(CH_2)_n(CE^1=CE^2)_a(CE^3=CE^4)CONR^1Z$

wherein Ar is phenyl or naphthyl, in either case unsubstituted or substituted by one or more of $C_{1-6}$ alkyl, halogen, $C_{1-6}$ alkoxy, $C_{1-6}$ alkyl optionally substituted by halo, or $C_{1-6}$ alkoxy optionally substituted by halo
x = 0 or 1
m = 1 to 7
n = 1 to 7
A = $CH_2$ or oxygen
a = 0 to 1
$R^1$ is independently selected from hydrogen, $C_{1-6}$ alkyl and $C_{3-6}$ cycloalkyl (either of which may be substituted by one or more of halo, $C_{1-6}$ alkyl, $C_{2-6}$ alkenyl, $C_{2-6}$ alkoxy, $C_{2-6}$ alkynyl, dioxalanyl and $C_{3-6}$ cycloalkyl
Z represents hydrogen or a group:

$-C^1(R_A)(R_B)-C^2(R_C)(R_D)(R_E)$

wherein $R_A$ and $R_B$, which may be identical or different, each represent hydrogen or methyl; $R_C$ represents methyl, $R_D$ represents methyl, ethyl, n -propyl, iso propyl, t -butyl or vinyl; and $R_E$ represents hydrogen or methyl; or wherein $R_C$ and $R_D$ form a methylene group ($=CH_2$) or together with $C^2$ form a cyclopropane or cyclobutane ring, $R_A$, $R_B$ and $R_E$ representing hydrogen or methyl, or wherein $R_A$ and $R_C$ together with $C^1$ and $C^2$ form a cyclobutane ring, $R_B$, $R_D$ and $R_E$ independently representing hydrogen or methyl:
$E^1$, $E^2$, $E^3$ and $E^4$ are independently selected from hydrogen, $C_{1-4}$ alkyl, optionally substituted by halo, or nitrile, provided that at least one of $E^1$, $E^2$, $E^3$ and $E^4$ is optionally substituted alkyl or nitrile except that (2E , 4E ) N-isobutyl 3-methyl-12-(3-chlorophenoxy)-dodeca--2,4,dienamide is excluded and provided that one but only one of $R^1$ and Z is hydrogen,
by

(a) by amidation of the corresponding acid or acid derivative, i.e. by reaction of a compound of Formula (II) with a compound of Formula (III):

(II) $Ar(CH_2)_xO(CH_2)_mA(CH_2)_n(CE^1=CE^2)_a(CE^3=CE^4)COZ^1$

(III) $HNR^1Z$

wherein $Z^1$ is hydroxyl, halo, a phosphoroimidate ester (-P(→0)(OAryl)NH.aryl) or alkoxy and the other variables are as defined in Claim I;
(b) by reaction of a compound of Formula (IV) with a compound of Formula (V):

(IV) $Ar(CH_2)_xO(CH_2)_mA(CH_2)_n(CE^1=CE^2)_pZ'$

(V) $Z''CONR^1Z$

where one of Z' and Z'' is $-C(O)E^5$ and the other is $(Z^2)_3P=CE^6(CE^3=CE^4)_q$ or $(Z^2)_2P(O)=CE^6-(CE^3=CE^4)_q$, wherein $Z^2$ is $C_{1-4}$ alkyl, $C_{1-4}$ alkoxy (preferably ethoxy) or aryl (preferably phenyl), p

and q are each 0 or I and p + q is 0 or I, $E^5$ is $E^1$ or $E^3$ and $E^6$ is $E^2$ or $E^4$, as appropriate;
(c) by an elimination reaction on a compound of Formula (VI) or (VII):

(VI) $Ar(CH_2)_xO(CH_2)_mA(CH_2)_n(CE^1=CE^2)CE^3(X)CE^4(Y)CONR^1Z$

(VII) $Ar(CH_2)_xO(CH_2)_mA(CH_2)_nCE^1(X)CE^2(Y)(CE^3=CE^4)CONR^1Z$

where one of X and Y is hydrogen and the other is a group Q (→O)L, in which Q is sulphur or selenium and L is a suitable group.
(d) by reacting a compound of Formula (VIII) with a compound of Formula (IX):

(VIII) $Ar(CH_2)_xO(CH_2)_mA(CH_2)_nCE^1=CE^2\text{-}M$

(IX) $Hal\text{-}CE^3=CE^4)CONR^1Z$

wherein Hal is halide is halide and M is a silicon or a metal atom or metal-containing group;
(e) by reaction of a compound of Formula (X) with a compound of Formula (XI):

(X) $Ar(CH_2)_xZ^3$

(XI) $Z^4\text{-}(CH_2)_mA(CH_2)_n(CE^1=CE^2)_a(CE^3=CE^4)CONR^1Z$

wherein one of $Z^3$ and $Z^4$ is -OH and the other is -OH or a suitable leaving group;
(f) when A is oxygen, by reaction of a compound of Formula (XII) with a compound of formula (XIII):

(XII) $Ar(CH_2)_xO(CH_2)_mZ^5$

(XIII) $Z^6(CH_2)_n(CE^1=CE^2)_a(CE^3=CE^4)CONR^1Z$

where one of $Z^5$ and $Z^6$ is -OH and the other is suitable leaving group;
(g) by reacting a compound of Formula (XIV) with one of Formula (XV) or (XVI):

(XIV) $Ar(CH_2)_xO(CH_2)_mA(CH_2)_nCE^1=CE^2\text{-}Hal$

(XV) $HCE^3=CE^4CONR^1Z$ (XVI) $E^3C=CE^4CONR^1Z$

where Hal is halogen, followed by semihydrogenation of the triple bond, if present;
(h) by semi-hydrogenation of the triple bond in a compound of Formula (XVII) or (XVIII):

(XVII) $Ar(CH_2)_xO(CH_2)_mA(CH_2)_n\text{-}C\equiv C\text{-}(CE^3=CE^4)_bCONR^1Z$

(XVIII) $Ar(CH_2)_xO(CH_2)_mA(CH_2)_n\text{-}(CE^1=CE^2)_a\text{-}C\equiv C\text{-}CONR^1Z$

wherein a and b are both I;
(i) by conversion of one compound of Formula (I) prepared as above into another compound of Formula (I) by any suitable process.

2. A process according to Claim I wherein Ar is phenyl substituted by one or more halogen or trifluoromethyl groups.

3. A process according to Claim I or 2 wherein a is I.

4. A process according to any one of the preceding claims wherein A is $-CH_2-$ and the sum of m and n is equal to an odd number.

5. A process according to any one of the preceding claims wherein $R^1$ is hydrogen and Z is $C_{1-5}$ alkyl.

6. A process according to any one of the preceding claims wherein the stereochemistry of the or each

double bond conjugated to the amide carbonyl is trans.

7. A process according to any one of the preceding claims wherein $E^1$, $E^2$ and $E^4$ are hydrogen and $E^3$ is methyl, fluoromethyl or trifluoromethyl.

8. A process according to Claim I for preparing N-isobutyl II-(3,5-bistrifluoromethylbenzyloxy)-3-methylundeca-2,4-dienamide, N-isobutyl I2-(2-naphthyl-oxy)-3-methyldodeca-2,4-dienamide, N-isobutyl II-(2,4-dichlorobenzyloxy)-3-methylundeca-2,4-dienamide or N-isobutyl I2-(3,5-bistrifluoromethylphenoxy)-3-methyl-dodeca-2,4-dienamide (in each case 2E, 4E).

9. A pesticidal composition comprising a compound prepared according to Claim I and one or more diluents, carriers etc.

10. A method of combatting pests by applying to the pest or its locus a compound prepared according to Claim I or a composition according to Claim 9.

**Revendications**

1. Composé de formule (I) :

$$Ar(CH_2)_xO(CH_2)_mA(CH_2)_n(CE^1{=}CE^2)_a(CE^3{=}CE^4)CONR^1Z \qquad (I)$$

où Ar est phényle ou naphtyle, dans l'un ou l'autre cas non substitué ou substitué par un ou plusieurs d'entre $C_{1-6}$-alcoyle, halogène, $C_{1-6}$-alcoxy, $C_{1-6}$ -alcoyle éventuellement substitué par halo ou $C_{1-6}$-alcoxy éventuellement substitué par halo;
x = 0 ou 1;
m = 1 à 7;
n = 1 à 7;
A = $CH_2$ ou oxygène;
a = 0 ou 1;
$R^1$ est indépendamment choisi parmi hydrogène, $C_{1-6}$-alcoyle et $C_{3-6}$-cycloalcoyle (dont l'un ou l'autre peut être substitué par un ou plusieurs d'entre halo, $C_{1-6}$-alcoyle, $C_{2-6}$-alcényle, $C_{2-6}$-alcoxy, $C_{2-6}$-alcynyle, dioxalanyle et $C_{3-6}$-cycloalcoyle);
z représente hydrogène ou un radical :

$-C^1(RA)\ (RB)-C^2(R_C)(R_D)\ (R_E)$

où $R_A$ et $R_B$, qui peuvent être identiques ou différents, représentent chacun hydrogène ou méthyle; $R_C$ représente méthyle; $R_D$ représente méthyle, éthyle, n-propyle, isopropyle, t-butyle ou vinyle; et $R_E$ représente hydrogène ou méthyle; ou bien où $R_C$ et $R_D$ forment un radical méthylène (=$CH_2$) ou conjointement avec $C^2$ forment un cycle cyclopropane ou cyclobutane, $R_A$, $R_B$ et $R_E$ représentant hydrogène ou méthyle; ou bien où $R_A$ et $R_C$ conjointement avec $C^1$ et $C^2$ forment un cycle cyclobutane, $R_B$, $R_D$ et $R_E$ représentant indépendamment hydrogène ou méthyle;
$E^1$,. $E^2$, $E^3$ et $E^4$ sont indépendamment choisis parmi hydrogène, $C_{1-4}$-alcoyle éventuellement substitué par halo, et nitrile, avec la restriction qu'au moins l'un d'entre $E^1$, $E^2$, $E^3$ et $E^4$ est alcoyle éventuellement substitué ou nitrile,
sauf que le (ZE ,4RE ) N-isobutyl-3-méthyl-12-(3-chloro-phénoxy)dodéca-2,4-diénamide est exclu et avec la restriction qu'un seul d'entre $R^1$ et Z est hydrogène.

2. Composé suivant la revendication 1, dans lequel Ar est phényle substitué par un ou plusieurs radicaux halogène ou trifluorométhyle.

3. Composé suivant la revendication 1 ou 2, dans lequel a est 1.

4. Composé suivant l'une quelconque des revendications précédentes, dans lequel A est $-CH_2-$ et la somme de m et n est égale à un nombre impair.

5. Composé suivant l'une quelconque des revendications précédentes, dans lequel $R^1$ est hydrogène et Z est $C_{1-5}$-alcoyle.

6. Composé suivant l'une quelconque des revendications précédentes, dans lequel la stéréochimie de la ou de chaque double liaison conjuguée au carbonyle d'amide est trans.

7. Composé suivant l'une quelconque des revendications précédentes, dans lequel $E^1$, $E^2$ et $E^4$ sont hydrogène et $E^3$ est méthyle, fluorométhyle ou trifluorométhyle.

8. Le N-isobutyl-11-(3,5-bistrifluorométhyl-benzyloxy)-3-méthylundéca-2,4-diénamide, le N-isobutyl-12-(2-naphtyloxy)-3-méthyldodéca-2,4-diénamide, le N-isobutyl-11-(2,4-dichlorobenzyloxy)-3-méthylundéca-2,4-diénamide et le N-isobutyl-l2-(3,5-bistrifluorométhylphénoxy)-3-méthyl-dodéca-2,4-diénamide (dans chaque cas 2E,4E).

9. Procédé de préparation d'un composé suivant la revendication 1 :

(a) par amidation de l'acide ou dérivé d'acide correspondant, c'est-à-dire par réaction d'un composé de formule (II) avec un composé de formule (III),

$$Ar(CH_2)_xO(CH_2)_mA(CH_2)_n(CE^1{=}CE^2)_a(CE^3{=}CE^4)COZ^1 \qquad (II)$$

$$HNR^1Z \qquad (III)$$

où $Z^1$ est hydroxyle, halo, un ester phosphoroimidique <-P(→0)(Oaryl)NH.aryle) ou alcoxy et les autres variables sont telles que définies dans la revendication 1;

(b) par réaction d'un composé de formule (IV) avec un composé de formule (V) :

$$Ar(CH_2)_xO(CH_2)_mA(CH_2)_n(CE^1{=}CE^2)_pZ' \qquad (IV)$$

$$Z''CONR^1Z \qquad (V)$$

où l'un d'entre z' et Z" est -C(O)$E^5$ et l'autre est $(Z^2)_3P{=}CE^6$ $(CE^3{=}CE^4)_q$ ou $(z^2)_2P$ (0) $=CE^6$ -$(CE^3{=}CE^4)_q$, où $Z^2$ est $C_{1-4}$ -alcoyle, $C_{1-4}$-alcoxy (de préférence éthoxy) ou aryle (de préférence phényle), p et q sont chacun 0 ou 1 et p+q est 0 ou 1, $E^5$ est $E^1$ ou $E^3$ et $E^6$ est $E^2$ ou $E^4$, suivant ce qui convient;

(c) par une réaction d'élimination sur un composé de formule (VI) ou (VII) :

$$Ar(CH_2)_xO(CH_2)_mA(CH_2)_n(CE^1{=}CE^2)CE^3(X)CE^4(Y)CONR^1Z \qquad (VI)$$

$$Ar(CH_2)_xO(CH_2)_mA(CH_2)_nCE^1(X)CE^2(Y)(CE^3{=}CE^4)CONR^1Z \qquad (VII)$$

où l'un d'entre X et Y est hydrogène et l'autre est un radical Q(→O)L, où Q est soufre ou sélénium et L est un radical approprié;

(d) par réaction d'un composé de formule (VIII) avec un composé de formule (IX) :

$$Ar(CH_2)_xO(CH_2)_mA(CH_2)_nCE^1{=}CE^2{-}M \qquad (VIII)$$

$$Hal{-}(CE^3{=}CE^4)CONR^1Z \qquad (IX)$$

où Hal est halogénure et M est un atome de silicium, un atome de métal ou un radical contenant un métal;

(e) par réaction d'un composé de formule (X) avec un composé de formule (XI) :

$$Ar(CH_2)_xZ^3 \qquad (X)$$

$$Z^4-(CH_2)_mA(CH_2)_n(CE^1=CE^2)_a(CE^3=CE^4)CONR^1Z \qquad (XI)$$

où l'un d'entre $Z^3$ et $Z^4$ est -0H et l'autre est -0H ou un radical partant approprié;

(f) lorsque A est oxygène, par réaction d'un composé de formule (XII) avec un composé de formule (XIII) :

$$Ar(CH_2)_xO(CH_2)_mZ^5 \qquad (XII)$$

$$Z^6-(CH_2)_n(CE^1=CE^2)_a(CE^3=CE^4)CONR^1Z \qquad (XIII)$$

où l'un d'entre $Z^5$ et $Z^6$ est -0H et l'autre est un radical partant approprié;

(g) par réaction d'un composé de formule (XIV) avec un composé de formule (XV) ou (XVI) :

$$Ar(CH_2)_xO(CH_2)_mA(CH_2)_nCE^1=CE^2-Hal \qquad (XIV)$$

$$HCE^3=CE^4CONR^1Z \qquad (XV)$$

$$E^3C\equiv CE^4CONR^1Z \qquad (XVI)$$

où Hal est halogène, suivie de la semi-hydrogénation de la triple liaison, si elle est présente;

(h) par semi-hydrogénation de la triple liaison dans un composé de formule (XVII) ou (XVIII) :

$$Ar(CH_2)_xO(CH_2)_mA(CH_2)_n-C\equiv C-(CE^3=CE^4)_bCONR^1Z \qquad (XVII)$$

$$Ar(CH_2)_xO(CH_2)_mA(CH_2)_n-(CE^1=CE^2)_a-C\equiv C-CONR^1Z \qquad (XVIII)$$

où a et b sont tous deux 1;

(i) par conversion d'un composé de formule (I) préparé comme ci-dessus en un autre composé de formule (I) par tout procédé approprié.

**10.** Composition pesticide comprenant un composé suivant la revendication 1 et un ou plusieurs diluants, excipients, etc.

**11.** Procédé pour combattre des organismes nuisibles par application sur l'organisme nuisible ou son lieu d'un composé suivant la revendication 1 ou d'une composition suivant la revendication 10.

Revendications pour l'Etat contractant suivant : ES

**1.** Procédé de préparation d'un composé de formule (I) :

$$Ar(CH_2)_xO(CH_2)_mA(CH_2)_n(CE^1{=}CE^2)_a(CE^3{=}CE^4)CONR^1Z \qquad (I)$$

où Ar est phényle ou naphtyle, dans l'un ou l'autre cas non substitué ou substitué par un ou plusieurs d'entre $C_{1-6}$-alcoyle, halogène, $C_{1-6}$-alcoxy, $C_{1-6}$-alcoyle éventuellement substitué par halo ou $C_{1-6}$-alcoxy éventuellement substitué par halo;
x = 0 ou 1;
m = 1 à 7;
n = 1 à 7;
A = $CH_2$ ou oxygène;
a = 0 ou 1;
$R^1$ est indépendamment choisi parmi hydrogène, $C_{1-6}$-alcoyle et $C_{3-6}$-cycloalcoyle (dont l'un ou l'autre peut être substitué par un ou plusieurs d'entre halo, $C_{1-6}$-alcoyle, $C_{2-6}$-alcényle, $C_{2-6}$-alcoxy, $C_{2-6}$-alcynyle, dioxalanyle et $C_{3-6}$-cycloalcoyle);
z représente hydrogène ou un radical :

$-C^1(R_A)(R_B)-C^2(R_C)(R_D)(R_E)$

où $R_A$ et $R_B$, qui peuvent être identiques ou différents, représentent chacun hydrogène ou méthyle; $R_C$ représente méthyle; $R_D$ représente méthyle, éthyle, n-propyle, isopropyle, t-butyle ou vinyle; et $R_E$ représente hydrogène ou méthyle; ou bien où $R_C$ et $R_D$ forment un radical méthylène (= $CH_2$) ou conjointement avec $C^2$ forment un cycle cyclopropane ou cyclobutane, $R_A$, $R_B$ et $R_E$ représentant hydrogène ou méthyle; ou bien où $R_A$ et $R_C$ conjointement avec $C^1$ et $C^2$ forment un cycle cyclobutane, $R_B$, $R_D$ et $R_E$ représentant indépendamment hydrogène ou méthyle;
$E^1$, $E^2$, $E^3$ et $E^4$ sont indépendamment choisis parmi hydrogène, $C_{1-4}$-alcoyle éventuellement substitué par halo, et nitrile, avec la restriction qu'au moins l'un d'entre $E^1$, $E^2$, $E^3$ et $E^4$ est alcoyle éventuellement substitué ou nitrile,
sauf que le (2E ,4RE ) N-isobutyl-3-méthyl-12-(3-chloro-phénoxy)dodéca-2,4-diénamide est exclu et avec la restriction qu'un seul d'entre $R^1$ et Z est hydrogène.

(a) par amidation de l'acide ou dérivé d'acide correspondant, c'est-à-dire par réaction d'un composé de formule (II) avec un composé de formule (III),

$$Ar(CH_2)_xO(CH_2)_mA(CH_2)_n(CE^1{=}CE^2)_a(CE^3{=}CE^4)COZ^1 \qquad (II)$$

$$HNR^1Z \qquad (III)$$

où $Z^1$ est hydroxyle, halo, un ester phosphoroimidique (-P(→0)(Oaryl)NH.aryle) ou alcoxy et les autres variables sont telles que définies dans la revendication 1;

(b) par réaction d'un composé de formule (IV) avec un composé de formule (V) :

$$Ar(CH_2)_xO(CH_2)_mA(CH_2)_n(CE^1{=}CE^2)_pZ' \qquad (IV)$$

$$Z''CONR^1Z \qquad (V)$$

où l'un d'entre Z' et Z" est -C(O)$E^5$ et l'autre est $(z^2)_3P{=}CE^6$ $(CE^3{=}CE^4)_q$ ou $(z^2)_2P(0){=}CE^6$ - $(CE^3{=}CE^4)_q$, où $Z^2$ est $C_{1-4}$-alcoyle, $C_{1-4}$-alcoxy (de préférence éthoxy) ou aryle (de préférence phényle), p et q sont chacun 0 ou 1 et p+q est 0 ou 1, $E^5$ est $E^1$ ou $E^3$ et $E^6$ est $E^2$ ou $E^4$, suivant ce qui convient;

(c) par une réaction d'élimination sur un composé de formule (VI) ou (VII) :

$$Ar(CH_2)_xO(CH_2)_mA(CH_2)_n(CE^1{=}CE^2)CE^3(X)CE^4(Y)CONR^1Z \qquad (VI)$$

$$Ar(CH_2)_xO(CH_2)_mA(CH_2)_nCE^1(X)CE^2(Y)(CE^3{=}CE^4)CONR^1Z \qquad (VII)$$

où l'un d'entre X et Y est hydrogène et l'autre est un radical Q(→O)L, où Q est soufre ou sélénium et L est un radical approprié;
(d) par réaction d'un composé de formule (VIII) avec un composé de formule (IX) :

$$Ar(CH_2)_xO(CH_2)_mA(CH_2)_nCE^1{=}CE^2{-}M \qquad (VIII)$$

$$Hal{-}(CE^3{=}CE^4)CONR^1Z \qquad (IX)$$

où Hal est halogénure et M est un atome de silicium, un atome de métal ou un radical contenant un métal;
(e) par réaction d'un composé de formule (X) avec un composé de formule (XI) :

$$Ar(CH_2)_xZ^3 \qquad (X)$$

$$Z^4{-}(CH_2)_mA(CH_2)_n(CE^1{=}CE^2)_a(CE^3{=}CE^4)CONR^1Z \qquad (XI)$$

où l'un d'entre $Z^3$ et $Z^4$ est -0H et l'autre est -0H ou un radical partant approprié;
(f) lorsque A est oxygène, par réaction d'un composé de formule (XII) avec un composé de formule (XIII) :

$$Ar(CH_2)_xO(CH_2)_mZ^5 \qquad (XII)$$

$$Z^6{-}(CH_2)_n(CE^1{=}CE^2)_a(CE^3{=}CE^4)CONR^1Z \qquad (XIII)$$

où l'un d'entre $Z^5$ et $Z^6$ est -0H et l'autre est un radical partant approprié;
(g) par réaction d'un composé de formule (XIV) avec un composé de formule (XV) ou (XVI) :

$$Ar(CH_2)_xO(CH_2)_mA(CH_2)_nCE^1{=}CE^2{-}Hal \qquad (XIV)$$

$$HCE^3{=}CE^4CONR^1Z \qquad (XV)$$

$$E^3C{\equiv}CE^4CONR^1Z \qquad (XVI)$$

où Hal est halogène, suivie de la semi-hydrogénation de la triple liaison, si elle est présente;
(h) par semi-hydrogénation de la triple liaison dans un composé de formule (XVII) ou (XVIII) :

$$Ar(CH_2)_xO(CH_2)_mA(CH_2)_n{-}C{\equiv}C{-}(CE^3{=}CE^4)_bCONR^1Z \qquad (XVII)$$

$$Ar(CH_2)_xO(CH_2)_mA(CH_2)_n{-}(CE^1{=}CE^2)_a{-}C{\equiv}C{-}CONR^1Z \qquad (XVIII)$$

où a et b sont tous deux 1;
(i) par conversion d'un composé de formule (I) préparé comme ci-dessus en un autre composé de

formule (I) par tout procédé approprié.

2. Procédé suivant la revendication 1, dans lequel Ar est phényle substitué par un ou plusieurs radicaux halogène ou trifluorométhyle.

3. Procédé suivant la revendication 1 ou 2, dans lequel a est 1.

4. Procédé suivant l'une quelconque des revendications précédentes, dans lequel A est $-CH_2-$ et la somme de m et n est égale à un nombre impair.

5. Procédé suivant l'une quelconque des revendications précédentes, dans lequel $R^1$ est hydrogène et Z est $C_{1-5}$-alcoyle.

6. Procédé suivant l'une quelconque des revendications précédentes, dans lequel la stéréoohimie de la ou de chaque double liaison conjuguée au carbonyle d'amide est trans.

7. Procédé suivant l'une quelconque des revendications précédentes, dans lequel $E^1$, $E^2$ et $E^4$ sont hydrogène et $E^3$ est méthyle, fluorométhyle ou trifluorométhyle.

8. Procédé suivant la revendication 1, pour préparer le N-isobutyl-11-(3,5-bistrifluorométhylbenzyloxy)-3-méthylundéca-2,4-diénamide, le N-isobutyl-l2-(2-naphtyl-oxy)-3-méthyldodéca-2,4-diénamide, le N-isobutyl-11-(2,4-dichlorobenzyloxy)-3-méthylundéca-2,4-diénamide ou le N-isobutyl-12- (3,5-bistrifluorométhylphénoxy) -3-méthyl-dodéca-2,4-diénamide (dans chaque cas 2E,4E).

9. Composition pesticide comprenant un composé suivant la revendication 1 et un ou plusieurs diluants, excipients, etc.

10. Procédé pour combattre des organismes nuisibles par application sur l'organisme nuisible ou son lieu d'un composé suivant la revendication 1 ou d'une composition suivant la revendication 9.

## Ansprüche

1. Verbindung der Formel (I)

$$\text{(I)} \quad Ar(CH_2)_xO(CH_2)_mA(CH_2)_n(CE^1{=}CE^2)_a(CE^3{=}CE^4)CONR^1Z$$

worin Ar eine Phenyl- oder Naphthylgruppe. die in jedem der beiden Falle unzubstitulert oder mit einer-(m) oder mehreren $C_{1-6}$ Alkylgruppe(n),Halogenatom(en). $C_{1-6}$` Alkoxygruppe(n), wahlweise mit Halogenatomen substituierten $C_{1-6}$-Allgruppe[n) oder wahlweise mit Halogenatomen substituierten $C_{1-6}$-oxygruppen substituiert ist.
x = Ooder1.
m = 1 bis 7,
n = 1 bis 7,
A = $CH_2$ oder Sauerstoff
a = Ooder1,
$R^1$ ein Wasserstoffatom, $C_{1-6}$-Alkyl- oder eine $C_{3-6}$-Cycloalkylgruppe, (die jeweils mit einem(r) oder mehreren Halogenatom(en), $C_{1-6}$-Alkylgruppe(n), $C_{2-6}$-Al-kenylgruppe(n), $C_{2-6}$-Alkoxygruppe(n), $C_{2-6}$-Alkinylgruppe(n). Dioxalanylgruppe(n) und $C_{3-6}$-Cycloalgruppe(n) substituiert sein konnen),
Z ein Wasserstoffatom oder eine Gruppe der Formel:

$-C^1(R_A)(R_B)-C^2(R_C)(R_D)(R_E)$

worin $R_A$ und $R_B$, die gleich oder voneinander verschieden sein können, jeweils Wasserstoffatome oder Methylgruppen darstellen; $R_C$ eine Methylgruppe. $R_D$ eine Methyl-, Ethyl-, n Propyl-, Iso propyl-, t - Butyl- oder Vinylgruppe-; und $R_E$ ein Wasserstoffatom oder eine Methylgruppe darstellen; oder worin $R_C$ und $R_D$ eine Methylengruppe ($=CH_2$) oder zusammen mit $C^2$ einen Cyclopropan- oder Cyclobutan-

ring bilden, wobei $R_A$, $R_B$ und $R_E$ ein Wasserstoffatom oder eine Methylgruppe darstellen oder worin $R_A$ und $R_C$ zusammen mit $C^1$ und $C^2$ einen Cyclobutanring bilden, wobei $R_B$,$R_D$ und $R_E$ voneinander unabhängig Wasserstoffatome oder Methylgruppen darstellen; und
$E^1$, $E^2$, $E^3$ und $E^4$ voneinander unabhängig Wasserstoffatome, wahlweise mit Halogenatomen substituierte $C_{1-4}$-Alkylgruppen oder Nitrilgruppen bedeuten mit der Maßgabe, daß mindestens eine der Gruppen $E^1$,$E^2$,$E^3$ und $E^4$ wahlweise mit einer Alkyl-oder Nitrilgruppe substituiert ist mit der Maßgabe, daß (2E , 4E )-N-Isobutyl-3-methyl-12-(3-chlorphenoxy)-dodeca-2,4-dienamid ausgeschlossen ist und mit der Maßgabe,daß nur eine der Gruppen $R^1$ und Z ein Wasserstoffatom bedeutet.

2. Verbindung nach Anspruch 1, worin Ar eine mit einem(r) oder mehreren Halogenatome(n) oder Trifluormethylgruppe(n) substituierte Phenylgruppe bedeutet.

3. Verbindung nach Anspruch 1 oder 2, worin a 1 bedeutet.

4. Verbindung nach einem der vorangegangenen Ansprüche, worin A eine -$CH_2$-Gruppe bedeutet und die Summe aus m und n gleich einer ungeraden Zahl ist.

5. Verbindung nach einem der vorangegangenen Ansprüche, worin $R^1$ ein Wasserstoffatom und Z eine $C_{1-5}$-Alkylgruppe bedeuten.

6. Verbindung nach einem der vorangegangenen Ansprüche. worin die Stereochemie der oder jeder mit der Amidcarbonylgruppe konjugierten Doppelbindung trans ist.

7. Verbindung nach einem der vorangegangenen Ansprüche, worin $E^1$,$E^2$ und $E^4$ Wasserstoffatome und $E^3$ eine Methyl-, Fluormethyl- oder Trifluormethylgruppe bedeuten.

8. N-Isobutyl-11-(3`5-bistrifluormethylbenzyloxy)-3-methylundeca-2,4-dien-amid, N-Isobutyl-12-(2-naphthyloxy)-3-methyldodeca-2,4-dienamid, N-Isobutyl- 11-(2,4-dichlorbenzyloxy)-3-methylundeca-2,4-dienamid und N-Isobutyl-12-(3,5-bistrifluormethylphenoxy) -3-methyldodeca-2,4-dienamid (jeweils 2E,4E).

9. Verfahren zur Herstellung einer Verbindung nach Anspruch 1, welches darin besteht, daß man
(a) die entsprechende Säure oder das entsprechende Säurederivat amidiert, d. h. eine Verbindung der Formel(II) mit einer Verbindung der Formel (III):

$$\text{(II)} \quad Ar(CH_2)_xO(CH_2)_mA(CH_2)_n(CE^1{=}CE^2)_a(CE^3{=}CE^4)COZ^1$$

$$\text{(III)} \quad HNR^1Z$$

worin $Z^1$ eine Hydroxylgruppe, ein Halogenatom, eine Phosphoroirnidatestergrvppe (-P(->0)(0Aryl)-NH.aryl) oder eine Alkoxygruppe bedeutet, und die anderen Variablen die in Anspruch 1 angegebenen Bedeutungen haben, umsetzt;
(b) eine Verbindung der Formel (IV) mit einer Verbindung der Formel (V):

$$\text{(IV)} \quad Ar(CH_2)_xO(CH_2)_mA(CH_2)_n(CE^1{=}CE^2)_pZ'$$

$$\text{(V)} \quad Z'CONR^1Z$$

worin eine der Gruppen Z'und Z" eine Gruppe der Formel -C(0)$E^5$ und die andere eine Gruppe der Formel $(Z^2)_3P=CE^6(CE^3=CE4)q$ oder $(Z^2)_2P(0)=CE^6(CE^3=CE^4)q$ bedeuten, worin $Z^2$ eine $C_{1-4}$-Alkylgruppe, $C_{1-4}$-Alkoxygruppe (vorzugswelse eine Ethorygruppe) oder eine Arylgruppe (vorzugsweise eine Phenylgruppe), p und q jeweils 0 oder 1 und p + q 0 oder 1,je nach Eignung $E^5$ $E^1$ oder$E^3$ und $E^6$ $E^2$ oder $E^4$ darstellen, umsetzt;
(c)eine Eliminierungsreaktion mit einer Verbindung der Formel (VI) oder (VII):

(VI) $Ar(CH_2)_xO(CH_2)_mA(CH_2)_n(CE^1{=}CE^2)CE^3(X)CE^4(Y)CONR^1Z$

(VII) $Ar(CH_2)_xO(CH_2)_mA(CH_2)_nCE^1(X)CE^2(Y)(CE^3{=}CE^4)CONR^1Z$

worin eine der Gruppen X und Y ein Wasserstoffatom und die andere eine Gruppe der Formel Q-(→0)L bedeuten, worin Q ein Schwefel- oder Selenatom und L eine geeignete Gruppe darstellen, durchführt;
(d) eine Verbindung der Formel (VIII) mit einer Verbindung der Formel (IX):

(VIII) $Ar(CH_2)_xO(CH_2)_mA(CH_2)_nCE^1{=}CE^2\text{-}M$

(IX) $Hal\text{-}(CE^3{=}CE^4)CONR^1Z$

worin Hal ein Halogenatom und M ein Sillciumatom oder ein Metallatom oder eine metallhaltige Gruppe bedeuten, umsetzt;
(e) eine Verbindung der Formel(X) mit einer Verbindung der Formel (XI):

(X) $Ar(CH_2)_xZ^3$

(XI) $Z^4\text{-}(CH_2)_mA(CH_2)_n(CE^1{=}CE^2)_a(CE^3{=}CE^4)CONR^1Z$

worin eine der Gruppen $Z^3$ und $Z^4$ eine 0H-Gruppe und die andere eine 0H-Gruppe oder eine geeignete austretende Gruppe bedeuten, umsetzt:
(f) wenn A ein Sauerstoffatom bedeutet, eine Verbindung der Formel (XII) mit einer Verbindung der Formel (XIII):

(XII) $Ar(CH_2)_xO(CH_2)_mZ^5$

(XIII) $Z^6\text{-}(CH_2)_n(CE^1{=}CE^2)_a(CE^3{=}CE^4)CONR^1Z$

worin eine der Gruppen $Z^5$ und $Z^6$ eine 0H-Gruppe und die andere eine geeignete austretende Gruppe bedeuten umsetzt;
(g)eine Verbindung der Formel (XIV) mit einer Verbindung der Formel (XV) oder (XVI):

(XIV) $Ar(CH_2)_xO(CH_2)_mA(CH_2)_nCE^1{=}CE^2\text{-}Hal$

(XV) $HCE^3{=}CE^4CONR^1Z.$ (XVI) $E^3C{\equiv}CE^4CONR^1Z$

worin Hal ein Halogenatom bedeutet, umsetzt und dann, falls vorhanden, die Dreifachbindung semihydriert;
(h)die Dreifachbindung in einer Verbindung der Formel (XVII) oder (XVIII):

(XVII) $Ar(CH_2)_xO(CH_2)_mA(CH_2)_nC{\equiv}C\text{-}(CE^3{=}CE^4)_bCONR^1Z$

(XVIII) $Ar(CH_2)_xO(CH_2)_mA(CH_2)_n\text{-}(CE^1{=}CE^2)_aC{\equiv}C\text{-}CONR^1Z$

worin sowohl a als auch b 1 bedeuten. semihydriert;

(i) eine oben hergestellte Verbindung der Formel (1) in eine andere Verbindung der Formel (1) nach irgendeinem geeigneten Verfahren umwandelt.

**10.** Zusammensetzung zur Schädlingsbekämpfung, enthaltend eine Verbindung nach Anspruch 1 und ein oder mehrere Verdünnungsmittel, Trägerstoffe und dergleichen.

**11.** Verfahren zur Bekämpfung von Schädlingen, welches darin besteht, daß man auf den Schädling oder seinen Anfenthaltsort eine Verbindung nach Anspruch 1 oder eine Zusammensetzung nach Anspruch 10 auibringt.

Patentansprüche für folgenden Vertragsstaat : ES

**1.** Verfahren zur Herstellung einer Verbindung der Formel (I)

$$\text{(I)} \quad Ar(CH_2)_xO(CH_2)_mA(CH_2)_n(CE^1{=}CE^2)_a(CE^3{=}CE^4)CONR^1Z$$

worin Ar eine Phenyl- oder Naphthylgruppe, die in jedem der beiden Falle unsubstituiert oder mit einer(m) oder mehreren $C_{1-6}$- Alkylgruppe(n), Halogenatom(en), $C_{1-6}$-Alkorygruppe(n), wahlweise mit Halogenatomen substituierten $C_{1-6}$-Alkylgruppe(n) oder wahlweise mit Halogenatomen substituierten $C_{1-6}$-Alkoxygruppen substituiert ist.

x=0 oder 1,

m = 1 bis 7.

n = 1 bis 7,

A = $CH_2$ oder Sauerstoff,

a=0 oder 1,

$R^1$ ein Wasserstoffatom, eine $C_{1-6}$-Alkyl oder eine $C_{3-6}$-Cycloalkylgruppe (die jeweils mit einem(r) oder mehreren Halogenatom(en),$C_{1-6}$-Alkygruppe(n), $C_{2-6}$-Al-kenylgruppe(n),$C_{2-6}$-Alkoxygruppe(n), $C_{2-6}$-Alkinylgruppe(n), Dioxalanylgruppe(n) und $C_{3-6}$-Cycloalkylgruppe(n) substituiert sein können),

Z ein Wasserstoffatom oder eine Gruppe der Formel:

$-C^1(R_A)(R_B)-C^2(R_C)(R_D)(R_E)$

worin $R_A$ und $R_B$, die gleich oder voneinander verschieden sein können, jeweils Wasserstoffatome oder Methylgruppen darstellen; $R_C$ eine Methylgruppe, $R_D$ eine Methyl-, Ethyl-, n-Propyl-, Iso propyl-, t - Butyl- oder Vinylgruppe-; und $R_E$ ein Wasserstoffatom oder eine Methylgruppe darstellen; oder worin $R_C$ und $R_D$ eine Methylengruppe (=$CH_2$) oder zusammen mit $C^2$ einen Cyclopropan- oder Cyclobutanring bilden, wobei $R_A$, $R_B$ und $R_E$ ein Wasserstoffatom oder eine Methylgruppe darstellen oder worin $R_A$ und $R_C$ zusammen mit $C^1$ und $C^2$ einen Cyclobutanring bilden, wobei $R_B$, $R_D$ und $R_E$ voneinander unabhängig Wasserstoffatome oder Methylgruppen darstellen; und

$E^1$,$E^2$,$E^3$ und $E^4$ voneinander unabhängig Wasserstoffatome, wahlweise mit Halogenatomen substituierte $C_{1-4}$-Alkylgruppen oder Nitrilgruppen bedeuten mit der Maßgabe, daß mindestens eine der Gruppen $E^1$,$E^2$,$E^3$ und $E^4$ wahlweise mit einer Alkyl-oder Nitrilgruppe substituiert ist mit der Maßgabe, daß(2E ,4E )-N-Isobutyl-3-methyl-12-(3-chlorphenoxy)-dodeca-2,4-dienamid ausgeschlossen ist und mit der Maßgabe, daß nur eine der Gruppen $R^1$ und Z ein Wasserstoffatom bedeutet, welches darin besteht, daß man

(a)die entsprechende Säure oder das entsprechende Säurederivat amidiert, d. h. eine Verbindung der Formel (II) mit einer Verbindung der Formel (III):

$$\text{(II)} \quad Ar(CH_2)_xO(CH_2)_mA(CH_2)_n(CE^1{=}CE^2)_a(CE^3{=}CE^4)COZ^1$$

$$\text{(III)} \quad HNR^1Z$$

worin $Z^1$ eine Hydroxylgruppe, ein Halogenatom, eine Phosphoroimidatestergruppe (-P(->0)(OAryl)-NH.aryl) oder eine gruppe bedeutet, und die anderen Variablen die in Anspruch 1 angegebenen

Bedeutungen haben, umsetzt;
(b) eine Verbindung der Formel (IV) mit einer Verbindung der Formel (V):

(IV) $Ar(CH_2)_xO(CH_2)_mA(CH_2)_n(CE^1{=}CE^2)_pZ'$

(V) $Z''CONR^1Z$

worin eine der Gruppen Z' und Z" eine Gruppe der Formel -C(O)$E^5$ und die andere eine Gruppe der Formel $(Z^2)_3P{=}CE^6(CE^3{=}CE^4)q$ oder $(Z^2)_2P(O){=}CE^6(CE^3{=}CE^4)q$ bedeuten, worin $Z^2$ eine $C_{1\text{-}4}$-Alkylgruppe, $C_{1\text{-}4}$-Alkoxygruppe (vorzugsweise eine Ethoxygruppe) oder eine Arylgruppe (vorzugsweise eine Phenylgruppe), p und q jeweils 0 oder 1 und p + q 0 oder 1,je nach Eignung $E^5$ $E^1$ oder $E^3$ und $E^6$ $E^2$ oder $E^4$ darstellen, umsetzt:
(c) eine Eliminierungsreaktion mit einer Verbindung der Formel (VI) oder (VII):

(VI) $Ar(CH_2)_xO(CH_2)_mA(CH_2)_n(CE^1{=}CE^2)CE^3(X)CE^4(Y)CONR^1Z$

(VII) $Ar(CH_2)_xO(CH_2)_mA(CH_2)_nCE^1(X)CE^2(Y)(CE^3{=}CE^4)CONR^1Z$

worin eine der Gruppen X und Y ein Wasserstoffatom und die andere eine Gruppe der Formel Q(→O)L bedeuten, worin Q ein Schwefel- oder Selenatom und L eine geeignete Gruppe darstellen, durchführt:
(d) eine Verbindung der Formel (VIII) mit einer Verbindung der Formel (IX):

(VIII) $Ar(CH_2)_xO(CH_2)_mA(CH_2)_nCE^1{=}CE^2\text{-}M$

(IX) $Hal\text{-}(CE^3{=}CE^4)CONR^1Z$

worin Hal ein Halogenatom und M ein Siliciumatom oder ein Metallatom oder eine metallhaltige Gruppe bedeuten, umsetzt;
(e) eine Verbindung der Formel (X) mit einer Verbindung der Formel (XI):

(X) $Ar(CH_2)_xZ^3$

(XI) $Z^4\text{-}(CH_2)_mA(CH_2)_n(CE^1{=}CE^2)_a(CE^3{=}CE^4)CONR^1Z$

worin eine der Gruppen $Z^3$ und $Z^4$ eine 0H-Gruppe und die andere eine 0H-Gruppe oder eine geeignete austretende Gruppe bedeuten, umsetzt;
(f) wenn A ein Sauerstoffatom bedeutet, eine Verbindung der Formel (XII) mit eher Verbindung der Formel (XIII):

(XII) $Ar(CH_2)_xO(CH_2)_mZ^5$

(XIII) $Z^6\text{-}(CH_2)_n(CE^1{=}CE^2)_a(CE^3{=}CE^4)CONR^1Z$

worin eine der Gruppen $Z^5$ und $Z^6$ eine 0H-Gruppe und die andere eine geeignete austretende tretende Gruppe bedeuten umsetzt;
(g)eine Verbindung der Formel (XIV) mit einer Verbindung der Formel (XV) oder (XVI):

(XIV) $Ar(CH_2)_xO(CH_2)_mA(CH_2)_nCE^1=CE^2\text{-}Hal$

(XV) $HCE^3=CE^4CONR^1Z$, (XVI) $E^3C\equiv CE^4CONR^1Z$

worin Hai ein Halogenatom bedeutet, umsetzt und dann, falls vorhanden. die Dreifachbindung semihydrlert:
(h) die Dreilachbindung in einer Verbindung der Formel (XVII) oder (XVIII):

(XVII) $Ar(CH_2)_xO(CH_2)_mA(CH_2)_nC\equiv C\text{-}(CE^3=CE^4)_bCONR^1Z$

(XVIII) $Ar(CH_2)_xO(CH_2)_mA(CH_2)_n\text{-}(CE^1=CE^2)_aC\equiv C\text{-}CONR^1Z$

worin sowohl a als auch b 1 bedeuten, semihydriert:
(i) eine oben hergestellte Verbindung der Formel (I) in eine andere Verbindung der Formel (I) nach irgendeinem geeigneten Verfahren umwandelt.

2. Verfahren nach Anspruch 1, worin Ar eine mit einem(r) oder mehreren Halogenatom(en) oder Trifluormethylgruppe(n) substituiert ist.

3. Verfahren nach Anspruch 1 oder 2, worin a 1 bedeutet.

4. Verfahren nach einem der vorangegangenen Ansprüche, worin A eine Gruppe der Formel $-CH_2-$ und die Summe aus m und n gleich einer ungeraden Zahl bedeuten.

5. Verfahren nach einem der vorangegangenen Ansprüche, worin $R^1$ ein Wasserstoffatom und Z eine $C_{1-5}$ -Alkylgruppe bedeuten.

6. Verfahren nach einem der vorangegangenen Ansprüche, worin die Stereochemie der oder jeder mit der Anudcarbonylgruppe konjugierten Doppelbindung trans ist.

7. Verfahren nach einem der vorangegangenen Ansprüche, worin $E^1$, $E^2$ und $E^4$ Wasserstoffatome und $E^3$ eine Methyl-, Fluormethyl- oder Trifluormethylgruppe bedeuten deuten.

8. Verfahren nach Anspruch 1 zur Herstellung von N-Isobutyl- 11-(3.5-bistrifluor-methylbemyloxy)-3-methylundeca-2` 4-dienamid, N-Isobutyl- 12-(2-naphthyloxy)-3-methyldodeca-2.4-dienamid, N-Isobutyl-11-(2.4-dichlorbenzyloxy-3-methylun-deca-2,4-dienamid oder N-Isobutyl- 12-(3.5-bistrifluormethylphenoxy)-3-methyldo-deca-2,4-dienamid (jeweils 2E,4E).

9. Zusammensetzung als Schädlingsbekämpfungsmittel, die eine nach Anspruch 1 hergestellte Verbindung und ein oder mehrere Verdünnungsmittel, Trägerstoffe und dergleichen enthält.

10. Verfahren zur Bekämpfung von Schädlingen, bei dem man auf den Schädling oder seinen Aufenthaltsort eine nach Anspruch 1 hergestellte Verbindung oder eine Zusammensetzung nach Anspruch 9 aufbringt.